# EUROPEAN PATENT SPECIFICATION

(11) **EP 1 315 350 B1**
(45) Date of publication and mention of the grant of the patent: **15.10.2008**
(21) Application number: 01127749.8
(22) Date of filing: 21.11.2001
(51) Int. Cl.: H04L 29/06

(54) **A method for unifying stream and URL parameter passing in a data processing system**
Verfahren zur Vereinheitlichung des Datenstroms und der Erfassung von URL Parametern in einem Datenverarbeitungssystem
Méthode pour unifier le flux de données et le transfert de paramètres URL dans un système de traitement de données

(43) Date of publication of application: 28.05.2003
(73) Proprietor: SUN MICROSYSTEMS, INC., Santa Clara, California 95054 (US)
(72) Inventor: Laux, Thorsten O., 20099 Hamburg (DE); Ruehl, Klaus, 22299 Hamburg (DE); Oppermann, Lars, 22335 Hamburg (DE)
(74) Representative: Harris, Ian Richard

(56) References cited:
- W3C: "SOAP Version 1.2 Part 1: Messaging Framework" W3C WORKING DRAFT, [Online] 2 October 2001 (2001-10-02), XP002198054 Retrieved from the Internet: <URL:http://www.w3.org/TR/2001/WD-soap12-p art1-20011002/> [retrieved on 2002-05-03]
- W3C: "SOAP Version 1.2 Part 2: Adjuncts" W3C WORKING DRAFT, [Online] 2 October 2001 (2001-10-02), XP002198055 Retrieved from the Internet: <URL:http://www.w3.org/TR/2001/WD-soap12-p art2-20011002/> [retrieved on 2002-05-03]
- W3C: "SOAP Messages with Attachments" W3C NOTE, [Online] XP002198056 Retrieved from the Internet: <URL:http://www.w3.org/TR/2000/NOTE-SOAP-a ttachments-20001211 > [retrieved on 2002-05-03]
- ENRIK FRYSTYK NIELSEN, HENRY SANDERS, ERIK CHRISTENSEN,: "Direct Internet Message Encapsulation" MICROSOFT, [Online] 23 May 2001 (2001-05-23), XP002198057 Retrieved from the Internet: <URL:http://www.gotdotnet.com/team/xml_wss pecs/dime/dime.htm> [retrieved on 2002-05-03]
- ALEKSANDER SLOMINSKI, MADHUSUDHAN GOVINDARAJU, DENNIS GANNON AND RANDALL BRAMLEY : "TR548: SoapRMI C++/Java 1.1: Design and Implementation" TECHNICAL REPORT, DEPARTMENT OF COMPUTER SCIENCE, INDIANA UNIVERSITY, [Online] May 2001 (2001-05), XP002198058 Retrieved from the Internet: <URL:http://www.cs.indiana.edu/ftp/techrep orts/TR548.html> [retrieved on 2002-05-03]

## Description

### FIELD OF THE INVENTION

The present invention relates to a method and a server unit of a data processing system in which a plurality of client units and a plurality of server units communicate through a communication network. In such a data processing system client units can send data processing requests to one or more server units, the server units will process data in accordance with the request made, and the server units will return a response to the respective client units after having processed the data as specified in the request.

The invention in particular addresses the problem to provide a mechanism by which an easy addressing of the location were the data to be processed is stored can be made by the server unit, in particular for cases where the data to be processed is an attachment portion of the request message and the processed data is an attachment portion of the response message.

### BACKGROUND OF THE INVENTION

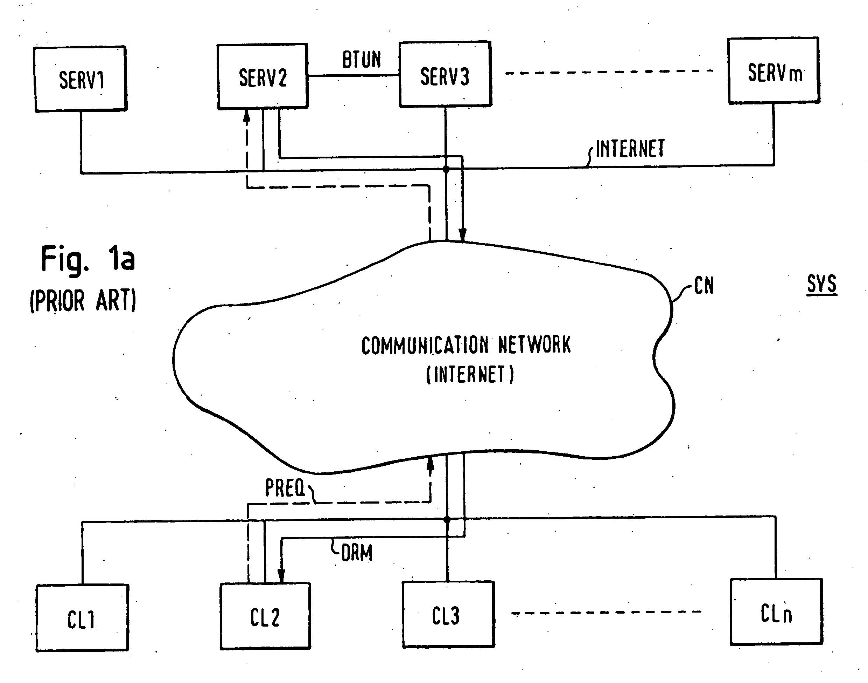

Fig. 1a shows a typical data processing system SYS for processing data sets including one or more server units SERV1, SERV2, SERV3....SERVm and one or more client units CL1, CL2, CL3...CLn, which communicate through a communication network CN, typically the Internet. The servers and/or the clients may be connected through an intranet. It is also possible that the servers SERVM are connected through a backend tunnel BTUN, as indicated in Fig. 1a.

The communication in the communication network CN may be done through packet switching, line switching or any other communication technology available. Essentially, as indicated in Fig. 1a, the purpose of the data processing system SYS is to allow the client units, for example the client unit CL2, to issue a data processing request PERQ through the communication network CN to one of the servers SERVm whilst one or more of the servers, e.g. the server SERV2, processes some data or retrieves some data in order to return a response message DRM through the communication network CN to the client unit CL2.

Although not shown in Fig. 1a, typically a load balancer is used which distributes the data processing request messages PEREQ of all client units to the respective server units depending on the processing loads of the server units such that an even low distribution among the server units is achieved. That is, typically the data processing request PREQ will only contain the desired type of processing and the location of the data sets to be processed whilst the client unit can not specify a particular server unit for carrying out the data processing task. In fact, it is also irrelevant for the client unit which server unit carries out the data set processing as long as it is guaranteed that the correct type of answer or response is returned from the server unit and the correct type of data processing is carried out on the server unit side.

The purpose of the data processing system SYS in Fig. 1a is two-fold. Firstly, a plurality of client units CL should be capable of issuing the data set processing requests PERQ. Secondly, the data processing system SYS in Fig. 1a does not need a large central computer, i.e. the necessary computing power is distributed among a plurality of server units which may interact for example through a local intranet, a LAN or some other type of local communication system.

### CLIENT/SERVER CONFIGURATION

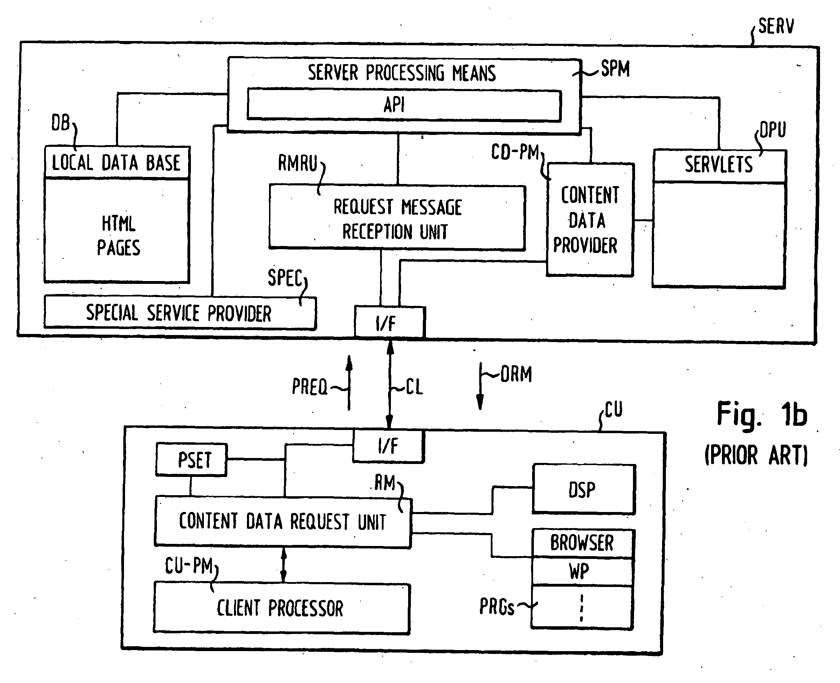

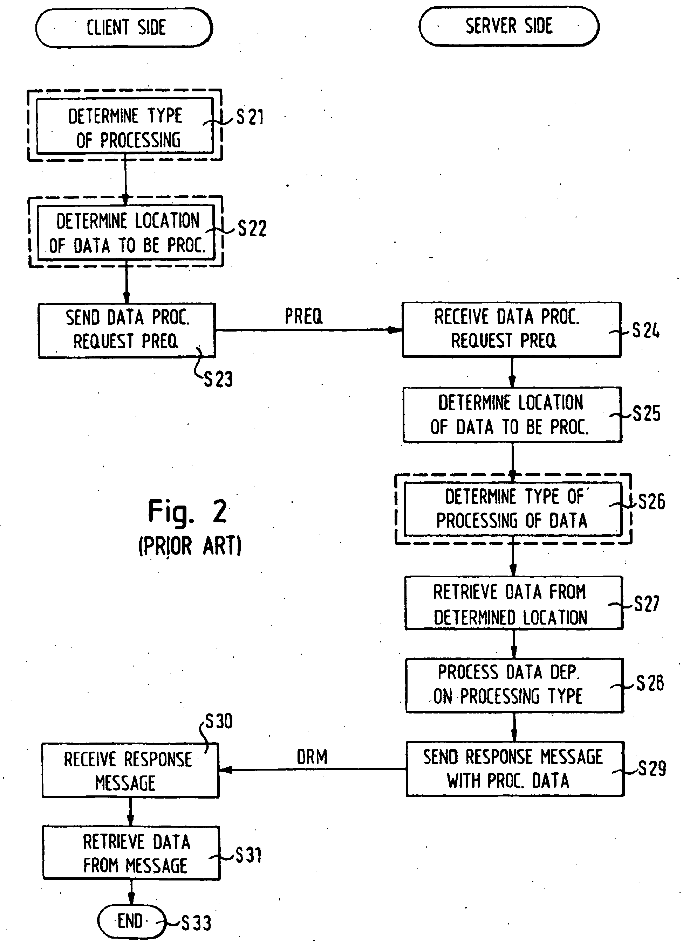

For carrying the respective functions the client unit and the server unit may be configured typically as shown in Fig. 1b. The client unit CU comprises an interface I/F to the communication line CL set up to the communication network CN (not shown in Fig. 2), a content data request unit RM outputting the data processing requests PREQ, a client processor CU-PM, a plurality of programs PRGs, such as a browser, a word processor WP etc., a display DSP and a page setting unit PSET for setting up the page format when sending and receiving data from the server unit SERV.

The server unit SERV comprises a server processing unit SPM, a request message reception unit RMRU, a content data provider CD-PM, a data processing units PROC (for example implemented as servlets in JAVA® (JAVA^{®} is a registered trademark by Sun Microsystems, Inc)), an interface I/F and a local database DB storing a plurality of data sets, for example HTML pages. The server unit may also comprise some special service provider SPC which provides special services which may not be provided by other server units. The server processing unit SPM and the content data provider CD-PM cooperate to retrieve or generate in response to a data processing request PREQ from the client unit data sets which may be located in the local database DB (static retrieval) or may even be located elsewhere at another server unit (in which case possibly the use of a backend tunnel BTUN is necessary to retrieve this data).

An Application Program Interface API is an interface in the server unit SERV by which an application program accesses an operating system and other devices. An API is defined at source code level and provides an abstraction between the application and the kernel to ensure portability of the code. An API can also provide an interface between a high level language and lower level utilities and services which were written without consideration for the calling conventions supported by compiled languages. In this case the API'S main task may be the translation of parameter lists from one format to another and the interpretation of arguments in one or both directions. Thus, the API serves as a kind of interface unit to the actual server processing unit SPM for processing the data sets in accordance with the type of requested processing. Of course, the server processing unit SPM including the API must be provided with information about the type of processing requested and about the location of the data set to be processed or to be retrieved on the server units side.

### DATA PROCESSING REQUEST/RESPONSE MESSAGE EXCHANGE

Fig. 2 shows a flowchart of a typical exchange of request messages PREQ and response messages DRM between the client side and the server side.

In the operation S21 the client unit runs for example a browser selected from the programs PRG on the client processor CU-PM and determines the type of processing. The dashed line box in the operation S21 indicates that this operation or any other kind of operation may involve the use of subprograms.

In the operation S22 the client unit determines the location of the data to be processed. As will be explained in more details below, if typically the internet is used for the communication network CN shown in Fig. 1a, then the location of data or data sets to be processed may be indicated with a URL (Universal Resource Locator) specification.

In the operation S23 the data processing request PREQ including at least a first portion indicating the data location reference indicating the location of at least one data set to be processed in said data processing system SYS is transmitted (through the communication network CN shown in Fig. 1a) to the server side, i.e. to one of the server units dependent on the load balancing function carried out by a (not shown) load balancer.

In the operation S24 the data processing request PREQ is received at the server unit, more particularly at the request message reception unit RMRU shown in Fig. 1b. In the operation S25 the location of the data set to be processed is determined, for example by the server processing unit SPM. In the operation S26 the type of processing of the data is determined, for example by the server processing unit SPM. The operation S26 also comprises the loading of a corresponding processing program DPU into the API wherein this data processing unit DPU is capable to carry out the type of processing of the data. It may also be noted that the indication of the type of processing is optional and a preset type of processing can be assumed on the server side if no special indication is contained in the data processing request PERQ.

In the operation S27 the data set is retrieved from the determined location and in the operation S28 the processing of the data set dependent on the processing type is carried out in the server processing unit SPU. In the operation S29 the response message DRM is compiled and sent to the client unit where it is received in the operation S30. The response message DRM can contain the processed data set or can simply be an acknowledge message that the type of processing has been carried out and completed successfully.

That is, the processing in the operation S28 may result in the generation of new data stored elsewhere or can result in the transmission of processed data to another location or can include the returning of data from the server unit to the client unit.

### DATA LOCATION DETERMINATION

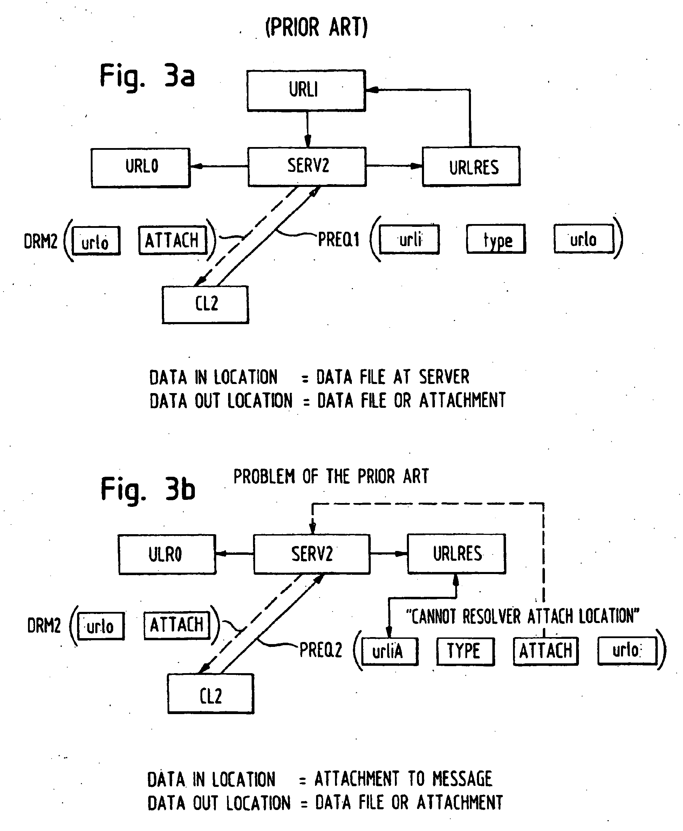

The operations S22, S26 described with reference to Fig. 2 already indicate that the location of the data set to be processed and/or the data set which has been processed must be referenced by some suitable mechanism. The conventional manner of doing this and a problem associated therewith are shown in Figs. 3a and 3b.

Fig. 3a shows in a more simplified manner the exchange of data processing requests PREQ1 and response messages DRM1 in the client/server communication.

Typically, two different types of data location references are needed, namely data location references, which are used in the data processing requests PREQ1 to indicate the location of the data to be processed. Such data location references are also called "in parameters". Furthermore, it may be necessary to indicate the specified output data location, i.e. the location where the data after its processing by the server side is to be put. These types of data location references are also called "out parameters".

Thus, in parameters and out parameters specify the source and destination location of certain data streams. More precisely, they specify the source and destination location address or location reference where the data to be processed and the data processed is to be stored. An example of a storage location identified by such a location reference or address is a memory or a part of a memory array comprising a plurality of storage locations. Hereinafter, the location itself, e.g. the memory, will be designated in capital letters, such as URLI, URLN, URLO, whilst references or addresses or commands will be designated in small letters, such as urlo, urln, urlo etc.

Fig. 3a shows a scenario where the request message is sent to the server unit SERV2 including some location references urli and urlo for designating the input URLI and output URLO location for a data stream to be processed.

As shown in Fig. 3a, typically the data processing request PREQ1 comprises a data location reference urli indicating the location URLI of at least one data set to be processed by the server unit SERV2. Optionally, the data processing request PREQ1 comprises the type of processing type if necessary, and an output location reference urlo where the data set after processing is to be stored.

A typical example of such a processing request PREQ relates to a scenario where a user at a client unit requests the server system to FAX a document located at a certain location URLI to another location URLO indicated by the output location reference urlo. Other types of desired processing may relate to a word processing function, a translation of a document located at a certain input source location URLI to be returned to the user at an output location ULRO, etc.

The input location reference urli can be resolved by a URL resolver URLRES on the server side SERV2 to allow the server SERV2 to fetch the actual input data set (Input Stream) from the desired input location URLI. After processing the server unit SERV2 puts the data into the desired output location URLO referenced by the output reference address urlo. As indicated in Fig. 3a, the response message DRM1 may comprise an indication urlo of the output location URLO (an out parameter) where the processed data is to be stored.

Furthermore, in certain implementations such as SOAP the response message DRM1 may also have a so-called attachment stream portion ATTACH which can be directly attached to the response DRM1. Therefore, in Fig. 3a, the data input location URLI may be a data file URLI at the server and the data out location URLO may be a data file URLO or an attachment ATTACH to the response message DRM1. As can be understood from Fig. 3a, it is always necessary to specify input locations URLI and optionally output locations URLO via the references urli and urlo. Depending on the type of desired processing, the client unit can also indicate a reference urlo for the output location URLO, e.g. the URL of another server or client unit, or alternatively the output reference urlo is generated autonomously by the server unit SERV2 and is indicated to the client unit in the response message DRM1. Thus, also for out parameters the place where to put the data stream can be specified, e.g. by a URL (Universal Resource Locator) which can be resolved by a URL resolver URLRES or it may be attached to the response message.

Fig. 3b shows the problem of the prior art described in Fig. 3a when a request message includes a special input location reference urliA which indicates as special input location not a data file URLI (as in Fig. 3a) but in fact the ATTACH portion of the request itself. That is, the data to be processed is attached to the request message, which is a typical scenario in SOAP implementations. In certain implementations such as SOAP it is possible to attach data to the respective messages PREQ2, DRM2 as attachments ATTACH.

Whilst in principle the first portion urliA will still serve the purpose of indicating the location of the data to be processed, such an input location reference urliA cannot be understood by a usual URL resolver. That is, a usual URL resolver URLRES as in Fig. 3a, 3b will expect to see in the first portion a URL (Universal Resource Locator) having a standard URL format which indicates a location of data to be precessed. However, a location reference urliA does not have this standard type of URL format and therefore the usual URL resolver, when examining the first portion, will not be able to detect from it any type of location reference; it will simply ignore the first portion content because the content does not have the expected format for URL data location referencing and therefore the standard URL resolver does not detect any input location from the first portion if the first portion includes a location reference type indicating as input location essentially the request message itself or, more precisely, its attachment.

For example, in SOAP implementations, the first portion urliA serves as a kind of "envelope" for the attachment data and a usual URL resolver will not identify this as a standard URL location reference. It simply does not know what to do with such a format of location reference in the first portion. Thus, whilst SOAP attachments describe a way how to reference attachments via URLs, these URLs can not be resolved using a usual URL resolver URLRES on the server side since they do not reference a resource accessible by a common protocol. Thus, if the request message carries data to be processed to the server unit, the location of this data (as being a part of the request message itself) cannot be identified and therefore the attached data cannot be processed on the server side.

Thus, there is a problem to find a way such that the server unit cannot only process data stored at data locations on the server unit side (and referenced with a location reference in the request message) but can also process data being attached to the request message itself (thus having a location which cannot be referenced with a data location reference having a format or type capable of only indicating locations on the server side).

As explained above, in a data processing system SYS where request and response messages can be exchanged in order to provide a particular processing of a data set located at an input location and to put the processed data set at an desired output location, there is the problem that the storage location determination mechanism of the server unit can only determine locations of data to be processed from a request message if the request message contains a location reference indicating as storage location a location on the server unit side. But the mechanism does not allow to identify as storage location an attachment portion of the request message itself.

### SUMMARY OF THE INVENTION

Therefore, it is desirable to provide mechanisms in a data processing system and a server unit which enable the server unit to not only process data which is stored on the server side but also to process data which is attached to the request message itself.

In one example, the servers side determines at an analysis unit a new data location reference where a data set whose location is indicated by the data processing request is to be stored. The data set is stored at the new location and a new data location reference is provided to one or more of the necessary processing units.

In another example, a re-writing unit simply replaces the original data location reference by a new data location reference in the data processing request which is then forwarded to the processing unit. Thus, the responsible processing unit can detect and read, for example by means of its URL resolver, the new data location reference where the data to be processed is stored.

In yet another example the analysis unit at the server unit not only comprises the determination of a new data storage location but also the determination of an appropriate data processing unit which is suitable to carry out the type of processing indicated in the data processing request.

In still another example, a plurality of new data location references can be determined such that one or more data processing units will be informed about the several new data location references. Thus, one or more data processing units can process data sets from one or more new data locations.

In another example, it is also possible that the original data processing request contains in the first portion a plurality of data location references and that the analysis unit determines a plurality of new data location references.

In still another example, the original data location reference is stored at the server unit in a memory. Thus, all server units can resolve these location references.

In another example, the data to be processed is transferred to the new location indicated by the new location reference whilst a copy of the data to be processed can be held at the first location.

In accordance with another example, the location indicated by the original data location reference is an attachment of the data processing request.

In accordance with another example, the location indicated by the original data location reference is a data storage location on the server side.

In accordance with another example, a data location where the data processed is to be stored is either a temporary file at the server unit or an attachment in the data response message.

In accordance with another example, the output location reference where the data processed by the data processing unit is stored is contained in the data response message to the client unit.

Thus, one example is a processing data sets in a data processing system including one or more server units and one or more client units, comprising the following operations: receiving a data processing request, issued from a client unit to a server unit, at an analysis unit of said server unit; said data processing request including in a first portion at least one data location reference indicating a location of at least one data set to be processed by said server unit; determining at said analysis unit whether said location reference indicates as location a data storage location at the server unit side or an attachment portion of said data processing request; determining at said analysis unit a new location reference indicating a storage location at the server unit side, if said location reference in said first portion indicates as location an attachment portion of said data processing request; storing at least a portion of said data set stored in said attachment portion at the new data location indicated by said new data location reference; forwarding said determined new data location reference to at least one data processing unit which is suitable to process said data set; and processing said data set stored at said new data location indicated by said new location reference by said at least one processing unit.

Thus, another example is a method for processing data sets in a data processing system including one or more server units and one or more client units, comprising the following operations: receiving a data processing request, issued from a client unit to a server unit, at an analysis unit of said server unit; said data processing request including in a first portion at least one data location reference indicating a location of at least one data set to be processed by said server unit; determining, at said analysis unit, the location of said data set to be processed by examining the first portion of said data processing request; retrieving at least a portion of a data set from said determined location indicated by the determined location reference; and storing said retrieved data set at a new data storage location.

Thus, another example is a server unit for processing data sets in a data processing system including one or more server units and one or more client units, comprising: a reception unit adapted for receiving a data processing request, issued from a client unit to said server unit; said data processing request including in a first portion at least one data location reference indicating a location of at least one data set to be processed by said server unit; an analysis unit adapted to determine whether said location reference; indicates as location a data storage location at the server unit side or an attachment portion of said data processing request; said analysis unit being further adapted to determine a new location reference indicating a storage location at the server unit side, if said location reference in said first portion indicates as location an attachment portion of said data processing request; a storing unit adapted to store at least a portion of said data set stored in said attachment portion at the new data location indicated by said new data location reference; a forwarding unit adapted to forward said determined new data location reference to at least one data processing unit which is suitable to process said data set; and a processing unit adapted to process said data set stored at said new data location indicated by said new location reference.

Thus, another example is server unit for processing data sets in a data processing system including one or more server units and one or more client units, comprising: a reception unit adapted to receive a data processing request, issued from a client unit to said server unit; said data processing request including in a first portion at least one data location reference indicating a location of at least one data set to be processed by said server unit; an analysis unit adapted to determine the location of said data set to be processed by examining the first portion of said data processing request; said analysis unit being also adapted to retrieve at least a portion of a data set from said determined location indicated by the determined location reference; and a storing unit adapted to store said retrieved data set at a new data storage location.

Thus, other examples also relate to computer products, computer programs and data carriers carrying a program for executing the above-mentioned operations.

Further advantageous embodiments and improvements of the invention may be taken from the dependent claims. Furthermore, it should be noted that the invention comprises embodiments comprising operations and features, which have been separately described in the specification and/or the claims and/or shown in the drawings.

Hereinafter, the invention will be described with reference to its advantageous embodiments.

### BRIEF DESCRIPTION OF THE DRAWINGS

In the drawings the same or similar reference numerals designate the same or similar parts throughout.
- Fig. 1a: is a general overview of the data processing system SYS in accordance with the prior art;
- Fig. 1b: is a general block diagram of the configuration of a server unit SERV and a client unit CU exchanging request PREQ and response DRM messages;
- Fig. 2: is a flowchart of the method in accordance with the prior art in order to request a data processing by a server side from a client side and for processing data on the server side;
- Fig. 3a: is a block diagram of a message exchange between a client unit CL2 and a server unit SERV2, in particular showing the in-parameters and out-parameters urli, urlo;
- Fig. 3b: a block diagram similar to the one in Fig. 3a but showing the problems to resolve a location reference urliA referencing an attachment ATTACH of a request message PREQ2;
- Fig. 4a: a general overview of a data processing systems SYS to which an example of the can refer;
- Fig. 4b: a block diagram similar as the one in Fig. 3a, 3b but showing processing operations and units at the server side, in accordance with embodiments of the invention;
- Fig. 4c: a general flow chart including general operations in accordance with embodiments of the invention carried out at the server side;
- Fig. 4d: a complete flowchart of an embodiment of the invention for an input referencing;

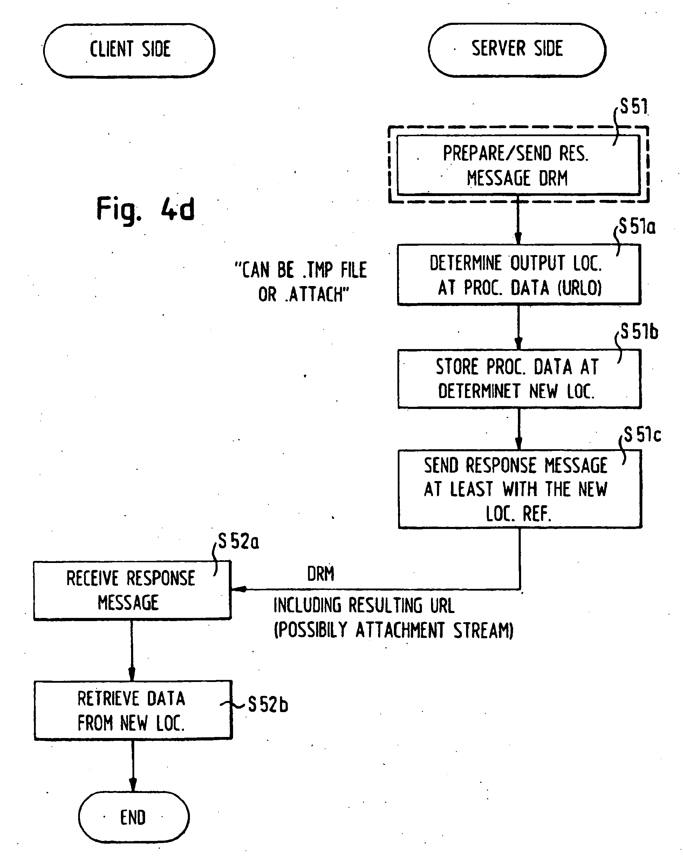

- Fig. 4d: a complete flowchart of an embodiment of the invention for an output referencing;

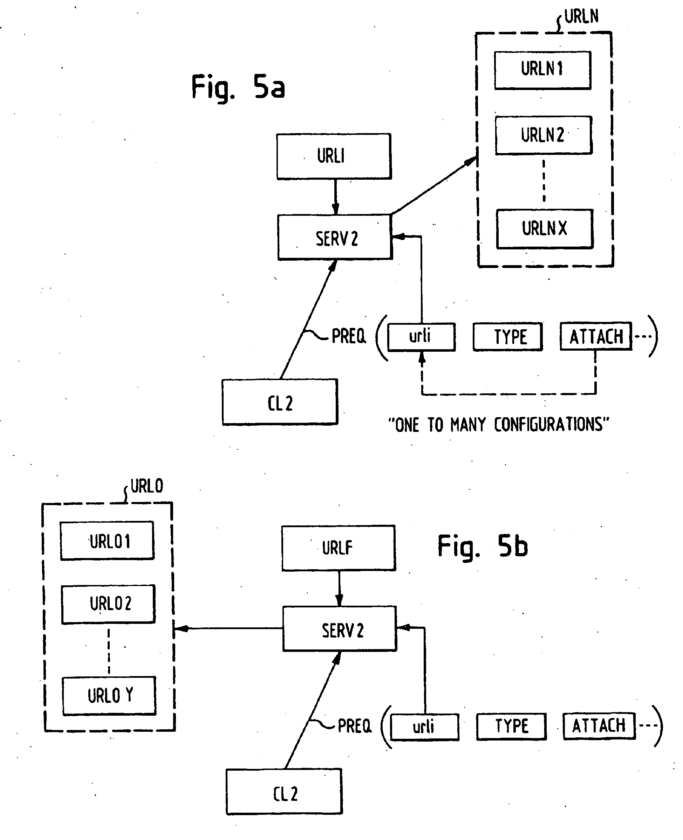

- Fig. 5a: a further embodiment of the invention where a plurality of new data location references are used; and
- Fig. 5b: a further embodiment of the invention where a plurality of output references URLO are used;

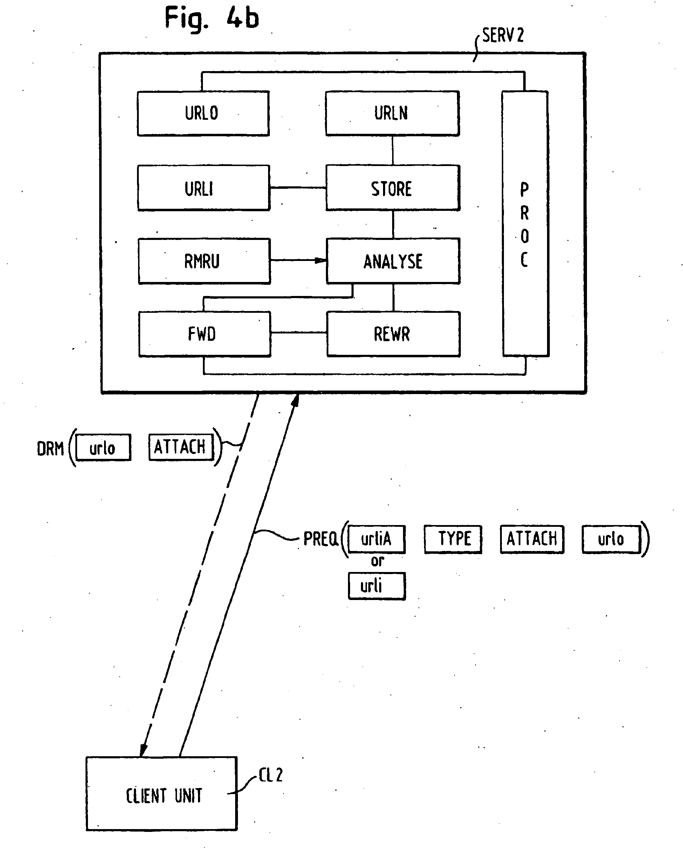

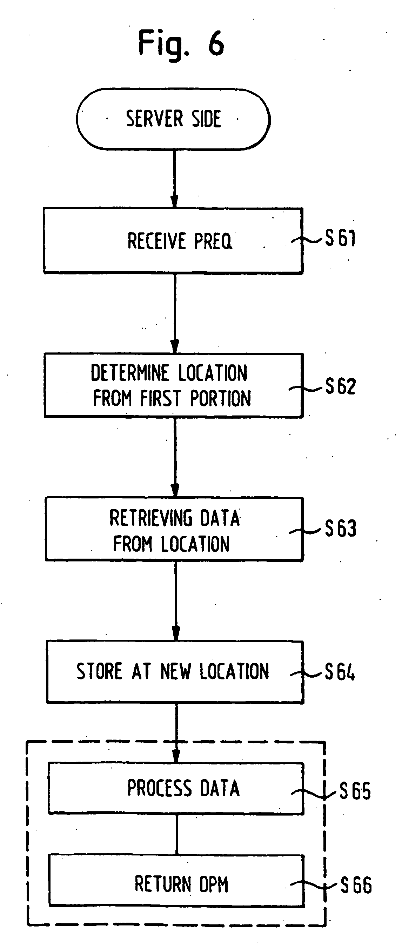

- Fig. 6: shows an example of a flowchart of the processing on the server side SERV2 shown in Fig. 4b; and

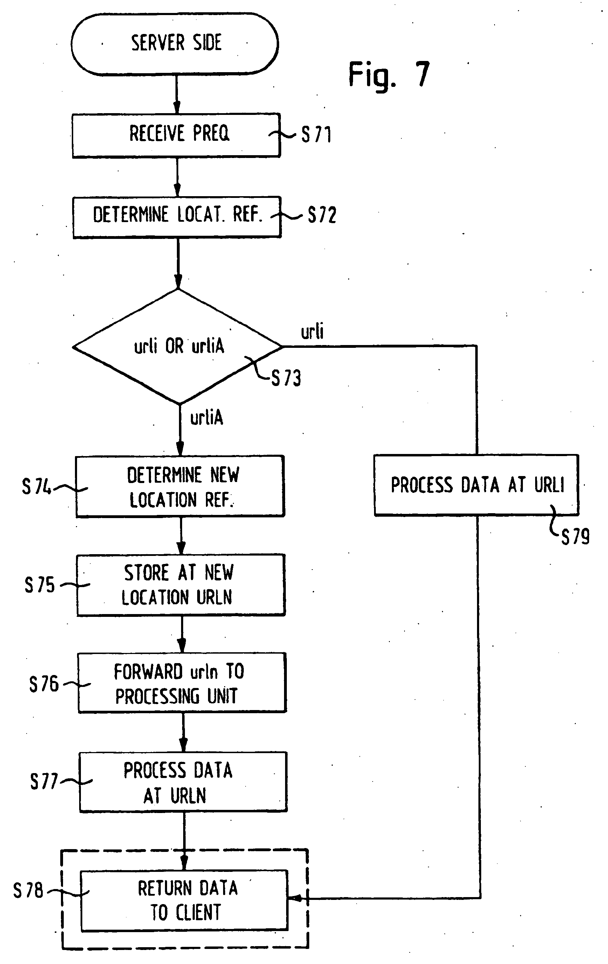

- Fig. 7: shows a further example of the processing on the server side in accordance with another example of the invention.

In the drawings, references like urli, urliA, urln and urlo in small letters designate a location reference which serve the purpose of a pointer to the storage location or the addressing of such a storage location, and references like URLI, URLIA, URLN and URLO in capital letters designate the actual storage location, for example a memory on the server side. Furthermore, in flow charts and block diagrams operations and units surrounded by a dashed or dotted line are optional operations and units for the respective functioning.

Furthermore, in the block diagrams, references attached to lines pointing from one unit to another unit give a reference, for easier understanding, to a respective flow chart including operations with the same designation.

### DETAILED DESCRIPTION OF THE PREFERRED EMBODIMENTS

Hereinafter, embodiments of the invention will be described with reference to the drawings. Whilst hereinafter often reference is made to a special message exchange between a client unit and a server unit in an Internet application example where web-pages are retrieved from a server unit in a JAVA® (JAVA® is a registered trademark by Sun Microsystems, Inc) environment, it should be understood that the invention is not limited to the JAVA® (JAVA® is a registered trademark by Sun Microsystems, Inc) data communication implementation.

The invention can be applied to any client server scenario, independent of the type of client and server implementation used. Furthermore, hereinafter references are often made to the special case where a request is made from a client unit and data is processed on the server side by a processing unit (PROC). However, it should be understood that the processing of data on the server side can entail the running of various applications on the server side and not just the retrieving, forwarding and processing data from a local data base.

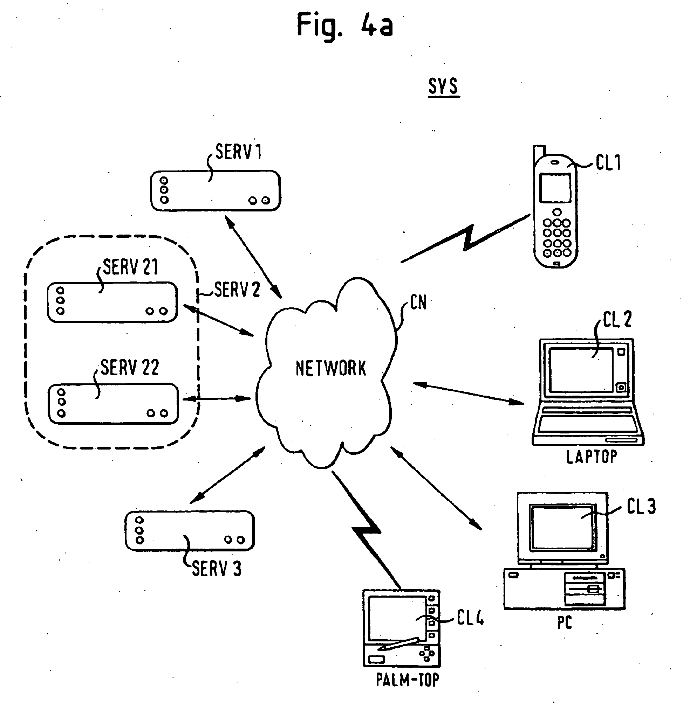

Before coming to a more detailed description of other embodiments, hereinafter we describe some aspects of the general data communication system to which the invention can relate by reference to Fig. 4a.

### GENERAL LAYOUT OF THE DATA PROCESSING SYSTEM SYS

Fig. 4a shows elements of the data processing system SYS including a network CN with a variety of different client units CL1, CL2, Cl3, CL4 and a plurality of server units SERV1, SERV2, (SERV21, SERV22), SERV3.

The network CN is provided for enabling a communication between the individual elements of the system for example shown in Fig. 6b. The communication network CN can be any kind of network for connecting the processing elements, such as a circuit switched network or a packet switched network. Furthermore, the communication network CN may include a plurality of different networks, e.g. a local area network, a wide area network, such as the Internet, or other networks, such as telephone networks, including telephone networks with dedicated communication links, connection-less networks and wireless networks.

Furthermore, Fig. 4a shows examples of client units, including a mobile telephone CL1, a laptop computer CL2, a personal computer CL3 and a palm top CL4.

Furthermore, Fig. 4a shows four server units SERV1, SERV21, SERV22, SERV3. The server units may be operated by different providers or vendors. For example, a first vendor or a provider may operate the server unit SERV1 and another provider or vendor may operate the server unit SERV3. Furthermore, another vendor or provider may operate two servers SERV21, SERV22, as illustrated by the box SERV2.

Each of the individual units shown in Fig. 4a is connected to the communication network CN via any kind of communication link, including dedicated communication lines, connection links and wireless communication links.

For example, the mobile telephone CL1 may preferably be connected to the network CN via a wireless communication link WL, whereas the personal computer CL3 will preferably be connected to the communication network CN via a communication link which includes a fixed transmission line, e.g. to a household or office.

The mobile telephone CL1 may be any kind of mobile telephone or terminal being equipped with hardware and/or software, for enabling the mobile telephone CL1 to function as a client unit as outlined below.

Furthermore, the mobile telephone CL1 may be equipped with a controlled unit for receiving a service request to process a data file, e.g. input through the keys of the mobile telephone or through voice. For example, a service request (content data request) could concern a display of directory information as in a standard form of mobile telephone. Furthermore, the mobile telephone possibly includes a plurality of implementation modules or of plug-ins to be activated via associated sub-file types. Thus, an implementation module can be selected which is compatible with the specific services provided by different telephone network operators or service providers. Furthermore, the implementation modules may be compatible with different versions of operating software at the server unit shown in Fig. 4a, whose particular functions will be explained below.

Furthermore, the laptop computer CL2 and the personal computer CL3 may be any kind of personal, laptop or mobile computing device connected to the network CN and equipped with appropriate hardware and/or software for enabling a functionality as described below. A different implementation module can be provided for cooperation with different server versions, application programs etc. This could include modules for visualisation, text processing, scientific applications and similar.

Furthermore, the palm-top CL4 may be any kind of palm-top computer, equipped with appropriate hardware and/or software for enabling a functionality as outlined below. For example, the palm-top could have implementation module installed, for cooperation with different versions of calendar applications e.g. provided by different service providers or implementation modules for cooperation with different information services provided by different countries for example to display different characters such as Latin characters, Chinese and similar.

The server units SERV1, SERV21, SERV22, SERV3 may be any kind of server devices providing a functionality outlined with respect to the embodiments below. For example, the server unit SERV1 could have an operating system of a first version of a sub-version. A version or a sub-version may be any kind of modification of an operating system of a server unit, e.g. one of a released version of an operating program provided by specific vendor or manufacture. Further, the version could be a modification of an operating program for example of providers or for special services.

Each of the client units SL1, CL2, CL3 and CL4 is preferably equipped with implementation modules compatible with the version of the operating program of the server unit SERV1. Similar applies to any other applications program implemented at the server unit SERV1, e.g. each of the client units can be equipped with implementation modules compatible with a specific version of an application program at the server unit SERV1. The other server units SERV21, SERV22, SERV3 may one or all be equipped with further versions of the operating program of application program, for cooperation with further implementation module at the client unit.

Whilst Fig. 4a shows four examples of client units, it is understood that any client unit could be provided.

The embodiment described with reference to Fig. 4a particularly illustrates how a plurality of different server units and client units may cooperate with one another, while ensuring full compatibility.

As may be understood from the configuration of the data processing system SYS in Fig. 4a, each of the client units CL1, CL2, CL3, CL4 may request a data processing from one or more server units SERV1, SERV2, SERV3 in order to have some data or data set processed on the server side. Such processing can for example include merely the sending of a facsimile document stored at one particular location to another particular location. Another example is to have a document residing at a local or remote data base in the server side translated by a special server and the translated document returned to the client unit or to another location.

Therefore, it is not only necessary to establish a message exchange of request and response messages through the communication network CN but also the location referencing is an important aspect in the data processing system SYS in Fig. 4a.

Hereinafter, a location reference serves as a kind of pointer to a storage location, i.e. it uniquely identifies the physical location of the storage location. Such a location reference may be a simple identification of the location but it may also contain an address identifying a particular data set stored at a particular address in the identified storage location. The location references are shown in small letters in the drawings.

The storage location on the server side itself may be any kind of memory either inside a server unit or outside the server unit. Such memory may be a RAM, EEPROM, ROM, an optical disk, a hard disk or any other type of memory. The storage locations are indicated with capital letters in the drawings.

Furthermore, in the drawings, optional operations, units and process flows are indicated with dashed or dotted lines.

### DETERMINATION OF A NEW DATA LOCATION REFERENCE

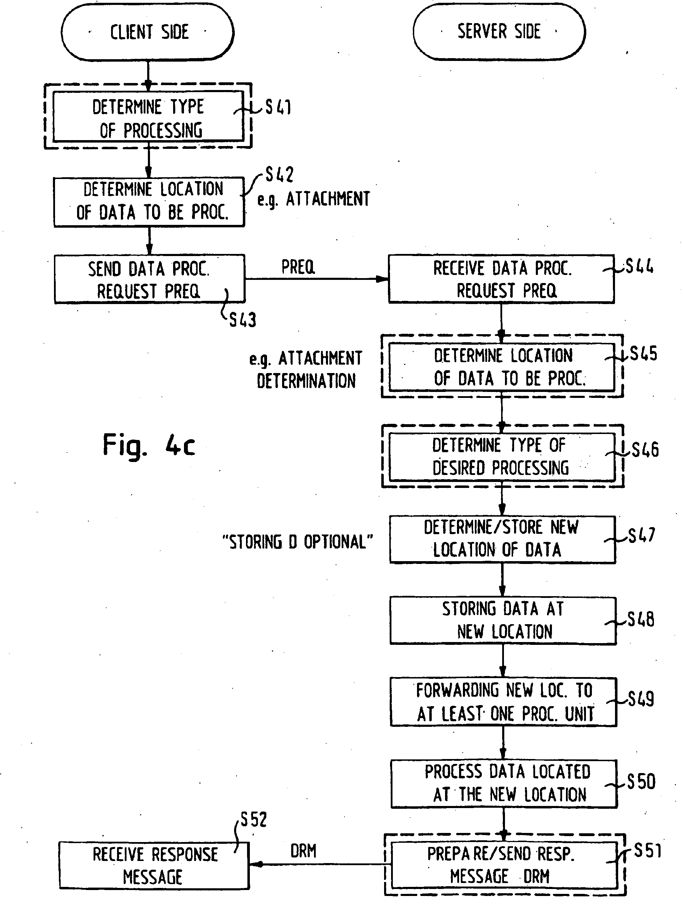

Fig. 4b shows a block diagram similar to the block diagram in Fig. 3a, 3b but showing the units necessary on the server side for achieving the principle of an example of the invention. Fig. 4c shows a flowchart of the method of an example of the including an "input referencing" and Fig. 4d is a flowchart of an example of the present invention including an "output referencing".

In Fig. 4b it should be understood that the client unit CL2 and the server unit SERV2 in principle comprise at least the same units as shown in Fig. 1b, i.e. the client unit CU comprises a request message sending unit RM, a client processor CU-PM and a display DSP together with an interface I/F and a page setting unit PSET.

On the other hand, the server unit SERV2 comprises a request message reception unit RMRU, a content data provider CD-PM, a server processing unit SPM including an API, a number of data processing units DPU and a local data base DB.

The additional unit ANALYSE in Fig. 4b designates an operation unit which may or may not be included inside the server unit SERV2. The analysis unit ANALYSE will be explained with more details below.

Furthermore, Fig. 4b also shows two storage locations URLI and URLN designating an original storage location URLI (an in parameter) and a new storage location URLN. Furthermore, also an output storage location URLO is shown. It should be noted that all storage locations, for example memories, URLI, URLN, ULRO may be residing at the same site where the server unit SERV2 is arranged or may in fact be located elsewhere in the server unit system.

As also shown in Fig. 4b, similarly as in Fig. 3a, 3b, the output location identified by the output location reference urlo may also be an attachment ATTACH of the response message DRM and the input location (in parameter) urliA may also refer to a data location within the request message PREQ itself. That is, the request message PREQ and the response message DRM may have attached data streams ATTACH which are referenced by a location reference parameter such as urliA und urlo. Typically, in Internet applications, the location references are so-called URL parameters (Uniform Resource Locator). Furthermore, although some examples will be described hereinafter where the actual data set or data location is an attachment to the original request message PREQ, it should be understood that the principle of an example of the invention is generally applicable to the case where the original input location for the data is a memory located at the server unit SERV2 or elsewhere in the server unit network.

However, before coming to a more detailed description of the method of an example of the in Fig. 4c (and subsequently Fig. 4d, 4e), the configuration of the units in connection with the server unit SERV2 shown in Fig. 4b will be described.

### CONFIGURATION OF THE SERVER UNIT SERV2

As explained above, of course the server unit SERV2 and the client unit CL2 comprises all the elements of the conventional server unit SERV and the client unit CU as shown in Fig. 1b of the prior art.

In addition the server unit SERV2 in accordance with an embodiment of the invention comprises reception unit RMRU adapted for receiving a data processing request PREQ issued from a client unit CL2 to said server unit SERV2, said data processing request PREQ including in a first portion at least one data location reference urli or urliA indicating a location URLI or ATTACH of at least one data set to be processed by said server unit SERV2, an analysis unit ANALYSE adapted to determine whether said location reference urli or urliA indicates as location a data storage location URLI at the server unit side or an attachment portion ATTACH of said data processing request PREQ, said analysis unit ANALYSE being further adapted to determine a new location reference urln indicating a storage location URLN at the server unit side, if said location reference urliA in said first portion indicates as location an attachment portion ATTACH of said data processing request PREQ, a storing unit STORE adapted to store at least a portion of said data set stored in said attachment portion ATTACH at the new data location URLN indicated by said new data location reference urln, a forwarding unit FWD adapted to forward said determined new data location reference urln to at least one data processing unit PROC which is suitable to process said data set; and a processing unit PROC adapted to process said data set stored at said new data location URLN indicated by said new location reference urln.

In addition, the server unit SERV2 can include a data location reference re-writing unit REWR adapted for replacing the original data location reference urli by a new data location reference urln in said data processing request PREQ. The forwarding unit FWD is then adapted to send the original data processing request PREQ with the replaced data location reference urln to the data processing unit PROC.

In Fig. 4b a number of memories URLN, URLI and URLO are also shown. These memories are identified by their respective data location reference having the same designation in small letters. Thus, for example the memory URLI is a memory where the input data set to be processed can be stored. As indicated in Fig. 4b, the first portion of the request PREQ can indicate a location reference urliA indicating as location for the input data set to be processed the location URLI.

On the other hand, the memory URLN is identified by a location reference urln and this memory URLN stores the data set under the new location reference urln. Furthermore, also an output memory URLO is shown where the processed data after having been processed by the processing unit PROC is stored.

Furthermore, although in Fig. 4b the memories URLI, URLO and URLN are shown as being located inside the server unit SERV2, i.e. not at other server units or elsewhere in the server network, these memories as well as the processing unit PROC may be located outside the server unit SERV2. On the other hand, the processing unit PROC itself may be part of the server processing unit SPM.

### GENERAL EXAMPLE OF AN OPERATION FLOW

The flow chart in Fig. 6 shows an example of the invention for the operations on the server side. This flow chart show in particular how data to be processed will be stored at a new location. In the operation S61, a request message PREQ issued from a client unit CL2 to a server unit SERV2 is received at the analysis unit ANALYZE of the server unit SERV1. As indicated in Fig. 4b, the data processing request PREQ includes in a first portion at least one data location reference urliA indicating a location URLI; ATTACH of at least one data set to be processed by said server unit SERV2.

In the operation S62, the analysis unit ANALYZE determines the location URLI; ATTACH of the data set to be processed by examining the first portion of the data processing request PREQ.

In the operation S63, at least a portion of the data set is retrieved from the determined location URLI; ATTACH indicated by the determined location reference urli; urliA.

Finally, in the operation S64 the retrieved data set is stored at new storage location URLN, as shown in Fig. 4b. The operations S65, S66 relate to the processing of the data at the new location URLN and the returning of a response message DPM to the client unit. In this example of the invention, the operations S65, S66 are optional (and therefore there are surrounded by dashed box).

As can be understood from the above description, independently as to whether the first portion indicates as a location for the data to be processed the actual memory URLI or an attachment portion ATTACH of the request message PREQ, the operation S63 retrieves the data from the determined location and the operation S64 stores the data at a new location, for example at URLN shown in Fig. 4b. Therefore, in accordance with this example of the invention, the data will always be processed from the new location URLN, independently whether it was originally referenced to be at the location URLI (e.g. a memory unit of the server SERV2) or at the attachment portion ATTACH of the request message PREQ.

That is, for both types of data location URLI and ATTACH, a new storage location URLN is determined and the data is stored at the new location URLN for further processing.

Fig. 7 shows a more detailed flowchart of another example of the invention for the particular case where the first portion contains as location reference urliA a reference to the attachment portion ATTACH.

In the operation S71, the reception unit RMRO receives the data processing request PREQ issued from the client unit CL2 to the server unit SERV1. As explained above, the data processing request PREQ includes in a first portion at least one data location reference urli; uliA indicating a location URLI; ATTACH of at least one data set to be processed by said server unit SERV2.

The reception unit RMRU passes on the request message PREQ to the analysis unit ANALYZE which in the operation S72 determines whether the location reference indicates as location a data storage location URLI at the server unit side or at an attachment portion of said data processing request PREQ.

If in the operation S73 the analysis unit ANALYZE determines that indeed the first portion contains a location reference urliA which refers to the attachment portion ATTACH, then the analysis unit ANALYZE determines in the operation S74 a new location reference urln indicating a new storage location URLN at the server unit side.

The storing unit STORE stores in the operation S75 the data from the attachment portion ATTACH at the new location URLN indicated by the new location reference urln.

In the operation S76, a forwarding unit FWD forwards the determined new data location reference urln to at least one data processing unit PROC which is suitable to process said data set now stored at the new location URLN. In the operation S77 the processing unit PROC processes the data at the new location URLN.

Optionally, in the operation S78 the data after processing is stored at an output location URLO and a return message DPM is provided to the client unit indicating either the location of the output data via an output location reference urlo (in which case the output data is stored at an output memory URLO) or as an attachment portion ATTACH of the response message DRM, as is indicated in Fig. 4b.

If the analysis unit in the operation S73 determines that the data location of the input data is a memory URLI on the server side, then the processing unit PROC can directly process the data at the location URLI in the operation S79. In this case the analysis unit ANALYZE simply extracts the location reference urli from the first portion of the request message PREQ and the forwarding unit FWD forwards this location reference urli to the processing unit PROC.

In accordance with another embodiment, it is also possible that a re-writing unit REWR re-writes the location reference urliA in the request message PREQ with the new location reference urln in which case the forwarding unit FWD will forward to the processing unit PROC simply the request message PREQ with the inserted new location reference urln. The processing unit PROC then processes the data from the new location urln.

In Fig. 7, the operation S73 may comprise the checking whether the location reference in the first portion of the request message PREQ complies with a standard format, for example with the standard format of a URL. If the analysis unit ANALYSE does not detect that the format is a standard URL format (from which an input location URLI can be determined), it can conclude that the location reference implicitly indicates that a reference is made to the data in the attachment portion ATTACH. For example, in SOAP messages exactly this is the case. That is, in a SOAP request message data can be included in an attachment portion but the location reference can not be evaluated by the URL resolver serving as an analysis unit ANALYSE. Therefore, if the analysis unit ANALYSIS detects such a location reference, it can derive in the operation S73 that the location reference is to the attachment portion and not to a location at the server side.

### INPUT REFERENCING FLOWCHART

Having the described general examples of the invention in Fig. 7 and Fig. 8 and the configuration of the server unit SERV2 in Fig. 7b, hereinafter an example of a method of the invention for "input referencing" will be described with reference to Fig. 4c. "Input referencing" in this context means the process of making sure that a location reference indicated for the location of data to be processed is always available to a processing unit PROC which is to process this data.

The operations S41, S42, S43 correspond to the operations S21, S22, S23 in Fig. 2. For example, in the operation S42 the request unit RM determines a location URLI of data to be processed. As shown in Fig. 4b, the input location reference urli indicates the location of at least one data set to be processed in the data processing system SYS. For example, the input location reference urli can also refer as input location to an attachment ATTACH which is attached as a data stream to the request message PREQ.

In the operation S44, the data processing request PREQ which has been addressed from the client unit CL2 to the server unit SERV2 is received at the analysis unit ANALYZE associated with the server unit SERV2. In the operations S45 and S46 (the operation S46 is optional if a prescribed data processing type is set beforehand) correspond to the operations S25, S26 in Fig. 2 of the prior art.

In the operation S47, the analysis unit ANALYZE determines at least one new data location reference urli where the data set indicated by the first portion in the request message PREQ is to be stored. As indicated in Fig. 4c, the operation S47 also comprises as an optional operation for storing the new data location reference urli, for example at a memory at the server unit. The operation S48 stores the data set to be processed at the new data location URLN.

One example is that the originally indicated location URLI is in fact a separate memory as shown with reference numeral URLI in Fig. 4b. In this case the operation S48 entails the transfer or copying of the respective data set contained in the memory URLI to the new memory location URLN.

Another example, also shown in Fig. 4b, is when the actual original location URLI is an attachment portion of the request message PREQ itself. In this case the data at the attachment portion is stored at the new storage location URLN in the operation S48. This is done by the storing unit STORE which is part of the server unit SERV2, as indicated in Fig. 4b.

In the operation S49 the new data location reference URLN is forwarded to the data processing unit PROC responsible for processing the data set stored at the new location URLN. In the drawing in Fig. 4b it has been assumed that the processing unit PROC is part of the server unit SERV2 and therefore the operation S49 can be viewed in Fig. 4b to be a flow from the analysis unit ANALYZE to the server unit SERV2. However, as explained above, the location of the individual units in Fig. 4b is not entirely fixed to be a part of the server unit SERV2 itself. In particular, the location of the input and output memories may be elsewhere in the server network.

In the operation S50, as also indicated in Fig. 4b, the responsible data processing unit processes the data set at the location URLN because a location reference urln was previously provided to the data processing unit in the operation S49. In the operation S51 a response message DRM is prepared including for example the processed data or at least an indication urlo of the storage location URLO of the processed data. The mechanism how to determine an output location URLO for the processed data is illustrated with the "output referencing" flowchart in Fig. 4d.

As explained above, in the operations S47, S48, S49 a new location for the data to be processed is determined, the data is stored at this new location (at least one data set of the data to be processed) and the new location is forwarded to the processing unit PROC. In accordance with one embodiment of the invention the operation S49 also comprises the forwarding of a trigger (an execution command) to the processing unit PROC for triggering the data processing of the data set at the new location URLN by said data processing unit PROC. The trigger serves the purpose of an execution command.

Essentially, the operation S49 is provided for informing the data processing unit PROC which is to process the data in the new location URLN about the new location URLN. In accordance with one embodiment of the invention, it is possible to provide a re-writing unit REWR which is adapted for simply replacing the original data location reference urli by the new data location reference urln in the data processing request PREQ in which case the forwarding unit FWD is adapted to send the original data processing request PREQ with the replaced data location reference urln to the data processing unit PROC. That is, in this case the analysis unit ANALYZE and the re-writing unit REWR merely process the original request PREQ, determine a new location URLN and the processing request PREQ with the replaced new location reference is forwarded to the processing unit PROC or to several processing units PROC which are responsible for processing the data set. In this case, in accordance with another embodiment of the invention, the forwarded processing request PREQ with the replaced location reference can also comprise the execution trigger as mentioned above.

In accordance with another embodiment of the invention, as also shown in Fig. 4b, the data processing request PREQ can also include a second portion TYPE indicating the requested type of processing, e.g. facsimile transmission, translation of a document, etc., for the data set, wherein the analysis unit ANALYZE also carries out the operation of determining a data processing unit PROC suitable to carry out the type of processing requested in the second portion. The forwarding unit FWD then forwards the new data location reference URLN to a data processing unit PROC which has been determined suitable for carrying out the TYPE of processing as determined by the analysis unit ANALYZE.

Fig. 5a shows an embodiment in which the data to be processed is stored at several new locations URLN1, URLN2,..,URLNX. In this embodiment of the invention, it should be noted that in the operation S49 the new data location reference urln can also be forwarded to a plurality of data processing units PROC which each are suitable for carrying out the data processing of the data set stored at said new location URLN.

That is, as shown in Fig. 5a, it is possible to store the original data set to be processed at a number of new locations URLN1, URLN2, ... URLNX. This refers to a "one to many configuration" regarding the usage of several new data locations. Of course, if several new location references urln1, urln2,..urlnx are determined and the data is stored there, the processing unit PROC must be in a position to correlate which data set is located in any one new location. Therefore, when the storing unit STORE stores the data at the new locations, indications about the locations in which the individual data sets are stored are also transferred to the processing unit.

Furthermore, although not shown in Fig. 4b, in accordance with another embodiment of the invention, it is also possible that a plurality of data location references are included in the first portion of the processing request PREQ. In this case, a single new data location reference urln can be determined by the analysis unit ANALYZE and the data sets stored at the plurality of data locations are stored at the single new data location URLN indicated by the single new data location reference. This refers to a "many to one configuration" regarding the usage of several input location references to one new location reference urln.

In another embodiment of the invention, it is also possible that a plurality of data location references are included in the first portion of the data processing request PREQ, a plurality of new data location references URLN1, URLN2, ..., URLNX (as shown in Fig. 5a) are determined by the analysis unit ANALYZE and the data sets stored at the plurality of data locations indicated by the data location references in the request message PREQ are stored at the plurality of new data locations indicated by the plurality of new data location references.

Furthermore, it should be noted that the reference "storing a data set at a new location URLN indicated by a new location reference urln" comprises the operation of merely transferring the data set from the original input location URLI to the new location URLN or the copying of the original data from the input location URLI to the new data location. In the former case no data will be held in the original location URLI whilst in the latter case a copy is kept in the original location URLI.

One example for "input referencing" is when the Application Processing interface API is completely based on location references such as the well known Uniform Resource Locator URL. For input streams the input location references urli can be regular URLs that can be resolved for example by a API. If the original data location reference urliA (in parameter) is an attachment ATTACH as shown in Fig. 4b, the input URLs for the attachments ATTACH are stored may be stored at the server side.

As explained above, as regards the "input referencing" in accordance with one example of the invention, an input location reference urli in a data processing request PREQ is replaced by a new data location reference urln. In accordance with another example of the invention, the data set stored at the original first data location URLI indicated in the request message PREQ is stored at the new second location URLN in response to the data processing request PREQ issued by the client unit.

The advantage is that any input location reference urli can be used in the request message PREQ because the analysis unit ANALYZE will always determine a new location URLN to which the data set indicated by the original location reference is stored. The processing unit or the processing units PROC then only access the new location URLN. Therefore, it is irrelevant whether the original data location reference urli can be resolved using e.g. a ULR resolver or not, because the new input location reference urln is always one which can be understood by the analysis unit ANALYZE.

Herebefore, only the "input referencing" have been described. With reference to Fig. 4d the output referencing will now be described.

### OUTPUT REFERENCING FLOWCHART

Fig. 4d shows the operations how the data response message DPM is prepared and how the process data is stored and/or provided back to the client unit.

In the operation S51 an output location reference urlo of an output location ULRO is determined. In the operation S51a the processed data is stored at the determined output location URLO. The operation S51a can include the determination of the output location reference urlo dependent on the original desired output location reference urlo contained in the request message PREQ.

In accordance with one embodiment of the invention the output location URLO can be a temporary file at the server unit SERV2. In accordance with another embodiment of the invention the data processed by the data processing unit PROC is stored as an attachment file in a data response message DPM sent from the server unit to the client unit CL.

In accordance with a further embodiment of the invention, it is possible, as in the standard case of the prior art, to simply return in the response message DRM an output location reference urlo indicating to the client unit CL where the data which has been processed in the data processing unit PROC is stored.

Therefore, for output streams it is possible to e.g. specify the actual URL parameter as out parameter. By using special URLs like "vnd.sun.star.attach" or "vnd.sun.star.tmp.file" it is possible that the server unit SERV2 stores the output stream either as a temporary file or attach it to the response. The resulting URL, which will be used to retrieve the result may be returned to the client unit in the response, as described above.

Therefore, in the operation S51c the response message is returned to the client unit CL at least with the new location reference URLO indicating where the processed data can be found. As in the previous examples it is of course possible that the indicated location URLO is in fact the attachment ATTACH of the response message DRM itself.

Fig. 5b shows an embodiment in which the processed data is stored at several output locations URLO1 URLO2,..,URLOX. This embodiment of the invention refers to a "one to many configuration" regarding the usage of several output data locations. Of course, if several output location references urlo1, urlo2,..urlox are determined and the data is stored there, the client unit which receives a response message DRM with such a plurality of output location references must be in a position to correlate which data set is located in any one output location. Therefore, together with the output references urlo1, urlo2,..urlox indications about the locations in which the individual processed data sets are stored are also transferred to the client unit in the response message DRM in the operation S51c.

### FURTHER EMBODIMENTS OF THE INVENTION

The client processor CU-PM and the server processing unit SPM or any other data processing device in the data processing system may be constituted by any kind of data processing device, such as a general purpose data processing device, a plurality of interconnected data processing devices, a mobile computing device, a personal data organizer, a mobile communication device, including mobile telephones and similar. The data processing device may be connected to other data processing devices (not shown) via any kind of communication link, including communication networks, connection less communication links, dedicated communication lines, wireless transmission links and similar.

The client control unit may be realized as an integral part of a data processing unit. For example, the client control unit could be realized in association with a central processing unit and by corresponding software operations, or could be realized as a hardware device, located inside or outside the data processing unit. Further, the control unit could be realized partially in hardware and partially in software. Further, the client control unit may be a single entity or distributed, e.g. over a plurality of data processing devices.

The requested content data can be a text document, may contain video information, images, audio information, could specify that the data file contains data in a specific other format, that the data file includes commands for further processing, parameters, results of scientific applications and similar. The content data may be located at a arbitrary location, e. g. within a memory unit of the server unit or at an external memory unit. The implementation module activated for retrieving content data may therefore retrieve the content data from the memory unit, either through an internal connection or via a connection to an external data processing device, such as a communication line or communication network including wireless connections.

It is noted that the above described elements and/or operations for requesting data, providing data and for the other functionalities in the data processing system may at least partially be realized as software or hardware. I. e. controls can be carried out using dedicated hardware, or a correspondingly programmed data processing device or group of data processing devices.

### CODE SECTION EMBODIMENTS OF THE INVENTION

Although the invention has been described with reference to general units and operations, it should be noted that the invention can be also be carried out by implementing each of the afore mentioned operations and units in software or hardware.

Further, it is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

In the following sections further examples of the elements of a server unit and a client unit of the above-described data processing system will be outlined. In these sections the respective units are implemented using code sections realized in software or hardware.
**1)** A server unit (SERV2) for processing data sets in a data processing system (SYS) including one or more server units (SERVm) and one or more client units (CL), comprising:
   **a)** a reception code section (RMRU) adapted for receiving (S44) a data processing request (PREQ), issued from a client unit (CL) to said server unit (SERV1) ,
      said data processing request (PREQ) including in a first portion at least one data location reference (urli; urliA) indicating a location (URLI; ATTACH) of at least one data set to be processed by said server unit (SERV2);
   **b1)** an analysis code section (ANALYSE) adapted to determine whether said location reference (urli; urliA) indicates as location a data storage location (URLI) at the server unit side or an attachment portion (ATTACH) of said data processing request (PREQ);
   **b2)** said analysis code section (ANALYSE) being further adapted to determine (S47) a new location reference (urln) indicating a storage location (URLN) at the server unit side, if said location reference (urliA) in said first portion indicates as location an attachment portion (ATTACH) of said data processing request (PREQ);
   **c)** a storing code section (STORE; S48) adapted to store at least a portion of said data set stored in said attachment portion (ATTACH) at the new data location (URLN) indicated by said new data location reference (URLN) ;
   **d)** a forwarding code section (FWD; S49) adapted to forward said determined new data location reference (urln) to at least one data processing code section (PROC) which is suitable to process said data set; and
   **e)** a processing code section (PROC; S50) adapted to process said data set stored at said new data location (URLN) indicated by said new location reference (urln).
**2)** A server unit (SERV2) according to example 1), including a data location reference re-rewriting code section (REWR) adapted for replacing said location reference (urli; urliA) by said new data location reference (urln) in said data processing request (PREQ) and wherein said forwarding code section (FWD) is adapted to forward the data processing request (PROC) with the replaced data location reference (urln) to said data processing code section (PROC).
**3)** A server unit (SERV2) according to example 2, wherein said forwarded data processing request (PROC) with the replaced data location reference (urln) also comprises an execution trigger (TRIG).
**4)** A server unit (SERV2) according to example 1), wherein said data processing request (PREQ) also includes a second portion indicating the requested type (TYPE) of processing (e.g. FAX) for said data set; wherein said analysis code section (ANALYSE) is further adapted to also determine a data processing code section (PROC) suitable to carry out the type (TYPE) of processing indicated in said second portion; and said forwarding code section (FWD) is adapted to forward the new data location reference (urln) to the data processing code section (PROC) determined by said analysis code section (ANALYSE).
**5)** A server unit (SERV2) according to example 1), wherein said forwarding code section (FWD) is adapted to forward said new data location reference (urln) to a plurality of data processing code sections (PROC) which each are suitable for carrying out the data processing of the data set stored at said new location (URLN).
**6)** A server unit (SERV2) according to example 1) or 5), wherein a plurality of new data location references (urli) are determined by said analysis code section (ANALYSE) and wherein said storing code section (STORE) is adapted to store said data set at said plurality of new data locations (URLN).
**7)** A server unit (SERV2) according to example 1) or 5), wherein a plurality of data location references (urli) are included in said first portion, a single new data location reference (urln) is determined by said analysis code section (ANALYSE) and said storing code section (STORE) is adapted to store the data sets stored at the plurality of data locations (URLI) at said single new data location (URLN) indicated by said single new data location reference (urli).
**8)** A server unit (SERV2) according to example 1) or 6), wherein a plurality of data location references (urli) are included in said first portion, a plurality of new data location references (urln) are determined by said analysis code section (ANALYSE) and said storing code section (STORE) is adapted to store the data sets stored at the plurality of data location (URLI) at said plurality of new data locations (URLN) indicated by said plurality of new data location references (urli).
**9)** A server unit (SERV2) according to example 1), wherein said data location reference (urli) of said data processing request (PREQ) is stored at said server unit (SERV1) in a memory.
**10)** A server unit (SERV2) according to example 1), wherein said data location (urli, urlo, urln) is a memory at said server unit side.
**11)** A server unit (SERV2) according to example 1), wherein the data processed by said data processing code section (PROC) is stored in a temporary file by the server unit (SERV).
**12)** A server unit (SERV2) according to example 1), wherein the data processed by said data processing code section (PROC) is stored as attachment (ATTCH) to a data response message sent from said server unit (SERV) to said client unit (CL).
**13)** A server unit (SERV2) according to example 1), wherein said processing code section (PROC) generates an output location reference (urlo) where the data processed by said data processing code section (PROC) is stored.
**14)** A server unit (SERV2) according to example 1), wherein said output location reference (urlo) is contained in said data response message (DRM) to said client unit (CL).
**15)** A server unit (SERV2) according to example 1), wherein the message exchange between the client unit and the server unit is implemented with SOAP messages implemented in a JAVA® (JAVA® is a registered trademark by Sun Microsystems, Inc) environment.
**16)** A server unit (SERV2) for processing data sets in a data processing system (SYS) including one or more server units (SERVm) and one or more client units (CL), comprising:
   **a)** a reception code section (RMRU) adapted to receive (S44) a data processing request (PREQ), issued from a client unit (CL) to said server unit (SERV1);
      said data processing request (PREQ) including in a first portion at least one data location reference (urliA) indicating a location (URLI; ATTACH) of at least one data set to be processed by said server unit (SERV2);
   **b)** an analysis code section (ANALYSE) adapted to determine the location (URLI; ATTACH) of said data set to be processed by examining the first portion (urli; urliA) of said data processing request (PREQ);
   **c)** said analysis code section (ANALYSE) being also adapted to retrieve (S48) at least a portion of a data set from said determined location (URLI; ATTACH) indicated by the determined location reference (urli; urliA); and
   **d)** a storing code section (STORE) adapted to store (S49) said retrieved data set at a new data storage location (URLN).
**17)** A server unit (SERV2) according to example 16), wherein when said analysis code section (ANALYSE) determines that the location (URLI) is a data storage location (URLI) at the server unit side, said analysis code section (ANALYSE) comprises the operation of retrieving said data from said server side storage location (URLI).
**18)** A server unit (SERV2) according to example 16), wherein when said analysis code section (ANALYSE) determines that the location (URLI) is an attachment portion (ATTACH) of said request message (PREQ), said analysis code section (ANALYSE) retrieves said data from said attachment portion (ATTACH) of said request message (PREQ).
**19)** A server unit (SERV2) according to example 16), wherein when said analysis code section (ANALYSE) determines that the location (URLI) is an attachment portion (ATTACH) of said request message (PREQ), said analysis code section (ANALYSE) replaces the existing data location reference (urlA) by a new data location reference (urln) indicating said new data storage location (URLN).
**20)** A server unit (SERV2) according to example 16), wherein said data processing request (PREQ) also includes a second portion indicating the requested type (TYPE) of processing (e.g. FAX) for said data set, wherein said analysis code section (ANALYSE) further comprises the operation of determining (S46) a data processing code section (PROC) suitable to carry out the type of processing (TYPE) indicated in said second portion and said forwarding code section (FWD) comprises the forwarding of the new data location reference (urln) to the data processing code section (PROC) determined by said analysis code section (ANALYSE).

### INDUSTRIAL APPLICABILITY

As described above with reference to Fig. 4a, the data processing system SYS, the client unit CL and the server unit SERV provide a mechanism by which the location of data set requested to be processed by the client unit can always be identified on the server unit side.

The aforementioned functionalities may be advantageously used in a client unit and server unit which run a JAVA® (JAVA^{®} is a registered trademark by Sun Microsystems, Inc) based processing software. However, any other processing software may also be used a skilled person. Furthermore, some examples of the client units and server units were above described with reference to Fig. 4a. However, it should be noted that other types of client units and server units in communication networks may be used.

Furthermore, it should be noted that the invention can comprise further embodiments which result from a combination of features and/or operations which have been separately described and claimed in the description and the claims. Furthermore, on the basis of the above teachings, a skilled person can carry out various modifications and variations and the scope of the invention should only be construed with reference to the attached claims.

Reference numerals in the claims only serve clarification purposes and do not limit the scope of the claims.

## Claims

1. A method for processing data sets in a data processing system (SYS) including one or more server units (SERVm) and one or more client units (CL), comprising the following operations:
a) receiving (S71) a data processing request (PREQ), issued from a client unit (CL) to a server unit (SERV1), at an analysis unit (ANALYSE) of said server unit (SERV1),
said data processing request (PREQ) including in a first portion at least one data location reference (urliA) indicating a location (URLI; ATTACH) of at least one data set to be processed by said server unit (SERV2);
**characterized by**
b1) determining (S72, S73) at said analysis unit (ANALYSE) whether said location reference indicates as location a data storage location (URLI) at the server unit side or an attachment portion (ATTACH) of said data processing request;
b2) determining (S74) at said analysis unit (ANALYSE) a new location reference (urln) indicating a storage location (URLN) at the server unit side, if said location reference (urliA) in said first portion indicates as location an attachment portion (ATTACH) of said data processing request (PREQ);
c) storing (S75) at least a portion of said data set stored in said attachment portion at the new data location (URLN) indicated by said new data location reference (urln) ;
d) forwarding (S76) said determined new data location reference (urln) to at least one data processing unit (PROC) which is suitable to process said data set; and
e) processing (S77) said data set stored at said new data location indicated by said new location reference (urln) by said at least one processing unit (PROC).

2. A method according to claim 1, further comprising the operation of forwarding an execution trigger (TRIG) from said server unit (SERV1) to said data processing unit (PROC) for triggering the data processing of the data set stored at the new data location by said data processing unit (PROC).

3. A method according to claim 1, further comprising the operations of replacing, at a data location reference re-rewriting unit (REWR), said data location reference (urliA) in said data processing request (PREQ) by said new data location reference (URLN) and forwarding the data processing request (PROC) with the replaced data location reference (URLN) to said data processing unit (PROC).

4. A method according to claim 2 and 3, further comprising the operation of forwarding said execution trigger (TRIG) together with the data processing request (PROC) including the replaced data location reference (URLN) to said processing unit (PROC).

5. A method according to claim 1, wherein said data processing request (PREQ) also includes a second portion indicating the requested type (TYPE) of processing for said data set, wherein said method further comprises the operation of determining (S46), at said analysis unit (ANALYSE), a data processing unit (PROC) suitable to carry out the type of processing (TYPE) indicated in said second portion and said forwarding operation comprises the forwarding of the new data location reference (urln) to the data processing unit (PROC) determined by said analysis unit (ANALYSE).

6. A method according to claim 1, further comprising the operation of forwarding said new data location reference (urln) to a plurality of data processing units (PROC) which each are suitable for carrying out the data processing of the data set stored at said new location (URLN).

7. A method according to claim 1 or 6, further comprising the operations of determining a plurality of new data location references (urln) by said analysis unit (ANALYSE) and the storing of said data set at said plurality of new data locations (URLN).

8. A method according to claim 1 or 6, wherein a plurality of data location references (urli) are included in said first portion, wherein said method includes the operations of determining a single new data location reference (urln) by said analysis unit (ANALYSE) and of storing the data sets stored at the plurality of data locations indicated by the data location references (urli) at said single new data location (URLN) indicated by said single new data vocation reference (urln).

9. A method according to claim 1 or 6, wherein a plurality of data location references (urli) are included in said first portion, wherein said method includes the operations of determining a plurality of new data location references by said analysis unit (ANALYSE) and of storing the data sets stored at the plurality of data location at said plurality of new data locations indicated by said plurality of new data location references.

10. A method according to claim 1, further comprising the operation of storing said new data location reference (urln) at said server unit (SERV1) in a memory.

11. A method according to claim 1, comprising the operation of using a memory at said server unit side as said data location (URLN).

12. A method according to claim 1, wherein said data processing unit (PROC) is a processor (PROC) at said server unit (SERV2).

13. A method according to claim 1, wherein said storing operation of said data set at said new data location (URLN) indicated by said new data location reference (urln) includes the operation of transferring of the data set to said new data location.

14. A method according to claim 1, wherein said storing operation of said data set at said new data location (URLN) indicated by said new data location reference (urln) includes the operation of copying the data set to said new data location (URLN).

15. A method according to claim 1, wherein when said data location reference (urli) contained in said data processing request (PRQ) indicates as location of said data to be processed a data storage location (URLI) at said server unit side (SERV), said method further comprises the operation of storing the data at said data storage location (URLI) at said new data location (URLN) indicated by said new data location reference (urln) and the processing the data set stored at the new data location (URLN) indicated by said data location reference (urli).

16. A method according to claim 1, further comprising the operation of storing the data processed by said data processing unit (PROC) in a temporary file at the server unit (SERV).

17. A method according to claim 1, further comprising the operation of storing the data processed by said data processing unit (PROC) as attachment file in a data response message (DRM) and the sending of the response message from the said server unit (SERV) to said client unit (CL).

18. A method according to claim 16 or 17, further comprising the operation of generating an output location reference (urlo) indicating a location (URLO) where the data processed by said data processing unit (PROC) is to be stored.

19. A method according to claim 18, further comprising the operation of including said output location reference (urlo) in said data response message (DRM) to said client unit (CL).

20. A method according to claim 1, wherein the message exchange between the client unit and the server unit is implemented with SOAP messages implemented in a JAVA^{®} (JAVA^{®} is a registered trademark by Sun Microsystems, Inc) environment.

21. A server unit (SERV2) for processing data sets in a data processing system (SYS) including one or more server units (SERVm) and one or more client units (CL), comprising:
a) a reception unit (RMRU) adapted for receiving (S44) a data processing request (PREQ), issued from a client unit (CL) to said server unit (SERV1),
said data processing request (PREQ) including in a first portion at least one data location reference (urli; urliA) indicating a location (URLI; ATTACH) of at least one data set to be processed by said server unit (SERV2);
**characterized by**
b1) an analysis unit (ANALYSE) adapted to determine whether said location reference (urli; urliA) indicates as location a data storage location (URLI) at the server unit side or an attachment portion (ATTACH) of said data processing request (PREQ);
b2) said analysis unit (ANALYSE) being further adapted to determine (S47) a new location reference (urln) indicating a storage location (URLN) at the server unit side, if said location reference (urliA) in said first portion indicates as location an attachment portion (ATTACH) of said data processing request (PREQ) ;
c) a storing unit (STORE; S48) adapted to store at least a portion of said data set stored in said attachment portion (ATTACH) at the new data location (URLN) indicated by said new data location reference (urln) ;
d) a forwarding unit (FWD; S49) adapted to forward said determined new data location reference (urln) to at least one data processing unit (PROC) which is suitable to process said data set; and
e) a processing unit (PROC; S50) adapted to process said data set stored at said new data location (URLN) indicated by said new location reference (urln).

22. A server unit (SERV2) according to claim 21, including a data location reference re-rewriting unit (REWR) adapted for replacing said location reference (urli; urliA) by said new data location reference (urln) in said data processing request (PREQ) and wherein said forwarding unit (FWD) is adapted to forward the data processing request (PROC) with the replaced data location reference (urln) to said data processing unit (PROC).

23. A server unit (SERV2) according to claim 22, wherein said forwarded data processing request (PROC) with the replaced data location reference (urln) also comprises an execution trigger (TRIG).

24. A server unit (SERV2) according to claim 21, wherein said data processing request (PREQ) also includes a second portion indicating the requested type (TYPE) of processing for said data set; wherein said analysis unit (ANALYSE) is further adapted to also determine a data processing unit (PROC) suitable to carry out the type (TYPE) of processing indicated in said second portion; and said forwarding unit (FWD) is adapted to forward the new data location reference (urln) to the data processing unit (PROC) determined by said analysis unit (ANALYSE).

25. A server unit (SERV2) according to claim 21, wherein said forwarding unit (FWD) is adapted to forward said new data location reference (urln) to a plurality of data processing units (PROC) which each are suitable for carrying out the data processing of the data set stored at said new location (URLN).

26. A server unit (SERV2) according to claim 21 or 25, wherein a plurality of new data location references (urli) are determined by said analysis unit (ANALYSE) and wherein said storing unit (STORE) is adapted to store said data set at said plurality of new data locations (URLN).

27. A server unit (SERV2) according to claim 21 or 25, wherein a plurality of data location references (urli) are included in said first portion, a single new data location reference (urln) is determined by said analysis unit (ANALYSE) and said storing unit (STORE) is adapted to store the data sets stored at the plurality of data locations (URLI) at said single new data location (URLN) indicated by said single new data location reference (urli).

28. A server unit (SERV2) according to claim 21 or 26, wherein a plurality of data location references (urli) are included in said first portion, a plurality of new data location references (urln) are determined by said analysis unit (ANALYSE) and said storing unit (STORE) is adapted to store the data sets stored at the plurality of data location (URLI) at said plurality of new data locations (URLN) indicated by said plurality of new data location references (urli).

29. A server unit (SERV2) according to claim 21, wherein said data location reference (urli) of said data processing request (PREQ) is stored at said server unit (SERV1) in a memory.

30. A server unit (SERV2) according to claim 21, wherein said data location (urli, urlo, urln) is a memory at said server unit side.

31. A server unit (SERV2) according to claim 21, wherein the data processed by said data processing unit (PROC) is stored in a temporary file by the server unit (SERV).

32. A server unit (SERV2) according to claim 21, wherein the data processed by said data processing unit (PROC) is stored as attachment (ATTCH) to a data response message sent from said server unit (SERV) to said client unit (CL).

33. A server unit (SERV2) according to claim 21, wherein said processing unit (PROC) generates an output location reference (urlo) where the data processed by said data processing unit (PROC) is stored.

34. A server unit (SERV2) according to claim 21, wherein said output location reference (urlo) is contained in said data response message (DRM) to said client unit (CL).

35. A server unit (SERV2) according to claim 21, wherein the message exchange between the client unit and the server unit is implemented with SOAP messages implemented in a JAVA^{®} (JAVA^{®} is a registered trademark by Sun Microsystems, Inc) environment.

## Patentansprüche

1. Verfahren zum Verarbeiten von Datensätzen in einem Datenverarbeitungssystem (SYS), welches eine oder mehrere Servereinheiten (SERVm) und eine oder mehrere Clienteinheiten (CL) umfaßt, wobei das Verfahren die folgenden Vorgänge aufweist:
a) Empfangen (S71) einer Datenverarbeitungsanfrage (PREQ), die von einer Clienteinheit (CL) an eine Servereinheit (SERV1) an eine Analyseeinheit (ANALYSE) der Servereinheit (SERV1) ausgegeben wird,
wobei die Datenverarbeitungsanforderung (PREQ) in einem ersten Abschnitt zumindest einen Datenlokalisierungshinweis (urliA) aufweist, welcher einen Ort (URLI; ATTACH), des von der Servereinheit (SERV2) zu verarbeitenden Datensatzes anzeigt,
**gekennzeichnet durch**
b1) Bestimmen (S72, S73) in der Analyseeinheit (ANALYSE), ob der Lokalisierungshinweis als Ort einen Datenspeicherort (URLI) bei der Servereinheit oder einen Anhangsabschnitt (ATTACH) der Datenverarbeitungsanforderung anzeigt,
b2) Bestimmen (S74) eines neuen Ortshinweises (urln) bei der Analyseeinheit (ANALYSE), wobei der neue Ort einen Speicherort (URLN) auf Seiten der Servereinheit anzeigt, wenn der Lokalisierungshinweis (urliA) in dem ersten Teil als Ort einen zugehörigen Teil (ATTACH) der Datenverarbeitungsanforderung (PREQ) anzeigt,
c) Speichern (S75) zumindest eines Teils des in dem Anhangsabschnitt gespeicherten Datensatzes an dem neuen Datenort (URLN), der **durch** den neuen Datenlokalisierungshinweis (urln) angezeigt wird,
d) Weiterleiten (S76) des festgestellten neuen Datenlokalisierungshinweises (urln) an zumindest eine Datenverarbeitungseinheit (PROC), die geeignet ist, den Datensatz zu verarbeiten, und
e) Verarbeiten (S77) des an dem neuen Ort, welcher **durch** den neuen Lokalisierungshinweis (urln) angezeigt wird, gespeicherten Datensatzes **durch** die zumindest eine Verarbeitungseinheit (PROC).

2. Verfahren nach Anspruch 1, welches weiterhin den Vorgang des Weiterleitens eines Ausführungsauslösers (TRIG) von der Servereinheit (SERV1) an die Datenverarbeitungseinheit (PROC) zum Auslösen der Datenverarbeitung des Datensatzes, welcher an dem neuen Datenort gespeichert ist, durch die Datenverarbeitungseinheit (PROC) aufweist.

3. Verfahren nach Anspruch 1, welches weiterhin die Vorgänge aufweist, daß an einer Einheit (REWR) zum Neuschreiben eines Datenlokalisierungshinweises, der Datenlokalisierungshinweis (urliA) in der Datenverarbeitungsanforderung (REQ) durch den neuen Datenlokalisierungshinweis (URLN) ersetzt wird, sowie das Weiterleiten der Datenverarbeitungsanforderung (PROC) mit dem ersetzten Datenlokalisierungshinweis (URLN) an die Datenverarbeitungseinheit (PROC).

4. Verfahren nach Anspruch 2 und 3, welches weiterhin den Vorgang des Weiterleitens des Ausführungsauslösers (TRIG), zusammen mit der Datenverarbeitungsanforderung (PROC) und einschließlich des Ersetzens des Datenlokalisierungshinweises (URLN), an die Datenverarbeitungseinheit (PROC) aufweist.

5. Verfahren nach Anspruch 1, wobei die Datenverarbeitungsanforderung (PREQ) auch einen zweiten Abschnitt umfaßt, welcher den angeforderten Typ (TYPE) der Verarbeitung für den Datensatz anzeigt, wobei das Verfahren weiterhin den Vorgang aufweist, daß bei der Analyseeinheit (ANALYSE) eine Datenverarbeitungseinheit (PROC) bestimmt wird (S46), die geeignet ist, die Art der Verarbeitung (TYPE), welche auf dem zweiten Abschnitt angegeben ist, auszuführen, und wobei der Weiterleitungsvorgang das Weiterleiten des neuen Datenlokalisierungshinweises (urln) an die Datenverarbeitungseinheit (PROC) aufweist, welche durch die Analyseeinheit (ANALYSE) bestimmt wurde.

6. V erfahren nach Anspruch 1, welches weiterhin den Vorgang des Weiterleitens des neuen Datenlokalisierungshinweises (urln) an eine Mehrzahl von Datenverarbeitungseinheiten (PROC) aufweist, die geeignet sind, die Verarbeitung des an dem neuen Ort (URLN) gespeicherten Datensatzes durchzuführen.

7. Verfahren nach Anspruch 1 oder 6, welches weiterhin die Vorgänge aufweist, daß eine Mehrzahl neuer Datenlokalisierungshinweise (urin) durch die Analyseeinheit (ANALYSE) festgestellt werden und daß der Datensatz bei der Mehrzahl von neuen Datenorten (URLN) gespeichert wird.

8. Verfahren nach einem der Ansprüche 1 oder 6, wobei eine Mehrzahl von Datenlokalisierungshinweisen (urli) in dem ersten Teil enthalten sind, wobei das Verfahren die Vorgänge aufweist, daß ein einziger neuer Datenlokalisierungshinweis (urln) durch die Analyse- , einheit (ANALYSE) bestimmt wird, und daß die an der Mehrzahl von Datenorten gespeicherten Datensätze, welche durch die Datenlokalisierungshinweise (urli) angezeigt werden, an dem neuen Datenort (URLN) gespeichert werden, welcher durch den neuen Datenlokalisierungshinweis (urln) angezeigt wird.

9. Verfahren nach Anspruch 1 oder 6, wobei eine Mehrzahl von Datenlokalisierungshinweisen (urli) in dem ersten Teil enthalten sind, wobei das Verfahren die Vorgänge aufweist, daß eine Mehrzahl neuer Datenlokalisierungshinweise durch die Analyseeinheit (ANALYSE) bestimmt wird, und daß die Datensätze, die bei der Mehrzahl von Datenorten gespeichert sind, an der Mehrzahl neuer Datenorte gespeichert werden, welche durch die neuen Datenlokalisierungshinweise angezeigt werden.

10. Verfahren nach Anspruch 1, welches weiterhin den Vorgang des Speicherns des neuen Datenlokalisierungshinweises (urln) bei der Servereinheit (SERV1) in einem Speicher aufweist.

11. Verfahren nach Anspruch 1, welches den Vorgang des Verwendens eines Speichers auf Seiten der Servereinheit als den erwähnten Datenort (URLN) aufweist.

12. Verfahren nach Anspruch 1, wobei die Datenverarbeitungseinheit (PROC) ein Prozessor (PROC) bei der Servereinheit (SERV2) ist.

13. Verfahren nach Anspruch 1, wobei der Speichervorgang des Datensatzes an dem neuen Datenort (URLN), welcher durch den neuen Datenlokalisierungshinweis (urln) angezeigt wird, den Vorgang umfaßt, daß der Datensatz an den neuen Datenort übertragen wird.

14. Verfahren nach Anspruch 1, wobei der Speichervorgang des Datensatzes an dem neuen Datenort (URLN), welcher durch den neuen Datenlokalisierungshinweis (urln) angezeigt wird, den Vorgang umfaßt, daß der Datensatz an den neuen Datenort (URLN) kopiert wird.

15. Verfahren nach Anspruch 1, wobei der Datenlokalisierungshinweis (urli), der in der Datenverarbeitungsanforderung (PREQ) enthalten ist, als ein Ort der zu verarbeitenden Daten eine Datenspeicherposition (URLI) auf Seiten der Servereinheit (SERV) anzeigt, wobei das Verfahren weiterhin den Vorgang des Speicherns der Daten an der Datenspeicherposition (URLI) an dem neuen Datenspeicherort (URLN) aufweist, welcher durch den neuen Datenlokalisierungshinweis (urln) angezeigt wird, sowie das Verarbeiten des Datensatzes, welcher an der neuen Datenspeicherstelle (URLN) gespeichert ist, die durch den Datenlokalisierungshinweis (urli) angezeigt wird.

16. Verfahren nach Anspruch 1, welches weiterhin den Vorgang aufweist, daß die durch die Datenverarbeitungseinheit (PROC) verarbeiteten Daten in einer Zwischendatei bei der Servereinheit (SERV) gespeichert werden.

17. Verfahren nach Anspruch 1, welches weiterhin den Vorgang aufweist, daß die durch die Datenverarbeitungseinheit (PROC) verarbeiteten Daten als anhängende Datei in einer Datenerwiderungsnachricht (DRM) gespeichert werden, und daß die Antwortnachricht von der Servereinheit (SERV) an die Clienteinheit (CL) gesendet wird.

18. Verfahren nach Anspruch 16 oder 17, welches weiterhin den Vorgang des Erzeugens eines Ausgangslokalisierungshinweises (urlo) aufweist, welcher einen Ort (URLO) anzeigt, wo die durch die Datenverarbeitungseinheit (PROC) verarbeiteten Daten gespeichert werden sollen.

19. Verfahren nach Anspruch 18, welches weiterhin den Vorgang aufweist, daß der Ausgangslokalisierungshinweis (urlo) in der Datenantwortnachricht (DRM) an die Clienteinheit (CL) enthalten ist.

20. Verfahren nach Anspruch 1, wobei der Nachrichtenaustausch zwischen der Clienteinheit und der Servereinheit mit SOAP-Nachrichten implementiert wird, die in einer JAVA^{®}-Umgebung implementiert sind (JAVA ist eine registrierte Marke von Sun Microsystems, Inc.).

21. Servereinheit (SERV2) zum Verarbeiten von Datensätzen in einem Datenverarbeitungssystem (SYS) einschließlich einer oder mehrerer Servereinheiten (SERVm) und einer oder mehrerer Clienteinheiten (CL), welche aufweist:
a) eine Empfangseinheit (RMRU), die für das Empfangen (S44) einer Datenverarbeitungsanforderung (PREQ) ausgelegt ist, welche von einer Clienteinheit (CL) an die Servereinheit (SERV1) ausgegeben wird,
wobei die Datenverarbeitungsanforderung (PREQ) in einem ersten Abschnitt zumindest einen Datenlokalisierungshinweis (urli; urliA) enthält, der einen Ort (URLI; ATTACH) zumindest eines durch die Servereinheit (SERV2) zu verarbeitenden Datensatzes umfaßt,
**gekennzeichnet durch**
b1) eine Analyseeinheit (ANALYSE), die dafür ausgelegt ist, festzustellen, ob der Lokalisierungshinweis (urli, urliA) einen Ort an einer Datenspeicherstelle (URLI) auf Seiten der Servereinheit oder einen Anhangabschnitt (ATTACH) der Datenverarbeitungsanforderung (PREQ) anzeigt,
b2) wobei die Analyseeinheit (ANALYSE) weiterhin dafür ausgelegt ist, einen neuen Datenlokalisierungshinweis (urln) festzustellen bzw. zu bestimmen, der einen Speicherort (URLN) auf Seiten der Servereinheit anzeigt, wenn der Lokalisierungshinweis (urliA) in dem ersten Abschnitt als Ort einen Anhangabschnitt (ATTACH) der Datenverarbeitungsanforderung (PREQ) anzeigt,
c) eine Speichereinheit (STORE; S48), die dafür ausgelegt ist, zumindest einen Teil des in dem Anhangabschnitt (ATTACH) gespeicherten Datensatzes an dem neuen Datenort (URLN) zu speichern, welcher **durch** den neuen Datenlokalisierungshinweis (urln) gezeigt wird,
d) eine Weiterleitungseinheit (FWS; S49), die dafür ausgelegt ist, den bestimmten neuen Datenlokalisierungshinweis (urln) an zumindest eine Datenverarbeitungseinheit (PROC) weiterzuleiten, die geeignet ist, den Datensatz zu verarbeiten, und
e) eine Verarbeitungseinheit (PROC; S50), die dafür ausgelegt ist, den an dem neuen Datenort (URLN), der **durch** den neuen Lokalisierungshinweis (urln) angezeigt wird, gespeicherten Datensatz zu verarbeiten.

22. Servereinheit (SERV2) nach Anspruch 21, welcher eine Einheit zum Neuschreiben (REWR) eines Datenlokalisierungshinweises umfaßt, die dafür ausgelegt ist, den Datenlokalisierungshinweis (urli;urliA) durch den neuen Datenlokalisierungshinweis (urln) in der Datenverarbeitungsanforderung (PREQ) zu ersetzen, und wobei die Weiterleitungseinheit (FWD) dafür ausgelegt ist, die Datenverarbeitungsanforderung (PROC) mit dem ersetzten Datenlokalisierungshinweis (urln) an die Datenverarbeitungseinheit (PROC) weiterzuleiten.

23. Servereinheit (SERV2) nach Anspruch 22, wobei die weitergeleitete Datenverarbeitungsanforderung (PROC) mit dem ersetzten Datenlokalisierungshinweis (urln) auch einen Ausführungsauslöser (TRIG) aufweist.

24. Servereinheit (SERV2) nach Anspruch 21, wobei die Datenverarbeitungsanforderung (PREQ) auch einen zweiten Abschnitt enthält, welcher den angeforderten Typ (TYPE) der Verarbeitung des Datensatzes anzeigt, wobei die Analyseeinheit (ANALYSE) weiterhin dafür ausgelegt ist, auch eine Datenverarbeitungseinheit (PROC) zu bestimmen, die geeignet ist, den Typ (TYPE) der Verarbeitung auszuführen, welcher in dem zweiten Abschnitt angezeigt wird, und wobei die Weiterleitungseinheit (FWD) dafür ausgelegt ist, den neuen Datenlokalisierungshinweis (urln) an die Datenverarbeitungseinheit (PROC) weiterzuleiten, welche durch die Analyseeinheit (ANALYSE) bestimmt wurde.

25. Servereinheit nach Anspruch 21, wobei die Weiterleitungseinheit (FWD) dafür ausgelegt ist, den neuen Datenlokalisierungshinweis (urln) an eine Mehrzahl von Datenverarbeitungseinheiten (PROC) weiterzuleiten, die jeweils geeignet sind, die Datenverarbeitung des an dem neuen Ort (URLN) gespeicherten Datensatzes durchzuführen.

26. Servereinheit (SERV2) nach Anspruch 21 oder 25, wobei eine Mehrzahl neuer Datenlokalisierungshinweise (urli) durch die Analyseeinheit (ANALYSE) bestimmt werden, und wobei die Datenspeichereinheit (STORE) dafür ausgelegt ist, den Datensatz bei der Mehrzahl neuer Datenorte (URLN) zu speichern.

27. Servereinheit (SERV2) nach Anspruch 21 oder 25, wobei eine Mehrzahl von Datenlokalisierungshinweisen (urli) in dem ersten Abschnitt enthalten sind, wobei ein einzelner neuer Datenlokalisierungshinweis (urln) durch die Analyseeinheit (ANALYSE) bestimmt wird und wobei die Speichereinheit (STORE) dafür ausgelegt ist, die bei der Mehrzahl von Datenorten (URLI) gespeicherten Datensätze an einem einzigen neuen Datenort (URLN) zu speichern, welcher durch den einzigen neuen Datenlokalisierungshinweis (urli) angezeigt wird.

28. Servereinheit (SERV2) nach Anspruch 21 oder 26, wobei mehrere Datenlokalisierungshinweise (urli) in dem ersten Abschnitt enthalten sind, mehrere neue Datenlokalisierungshinweise (urln) durch die Analyseeinheit (ANALYSE) bestimmt werden, und die Speichereinheit (STORE) dafür ausgelegt ist, die an der Mehrzahl von Datenorten (URLI) gespeicherten Daten an der Mehrzahl neuer Datenorte (URLN) zu speichern, welche durch die Mehrzahl von neuen Datenlokalisierungshinweisen (urli) angezeigt werden.

29. Servereinheit (SERV2) nach Anspruch 21, wobei der Datenlokalisierungshinweis (urli) der Datenverarbeitungsanforderung (PREQ) bei der Servereinheit (SERV1) in einem Speicher gespeichert werden.

30. Servereinheit (SERV2) nach Anspruch 21, wobei der Datenort (urli, urlo, urln) ein Speicher auf Seiten des Servers ist.

31. Servereinheit (SERV2) nach Anspruch 21, wobei die durch die Datenverarbeitungseinheit (PROC) verarbeiteten Daten durch die Servereinheit (SERV) in einer temporären Datei gespeichert werden.

32. Servereinheit (SERV2) nach Anspruch 21, wobei die durch die Datenverarbeitungseinheit (PROC) verarbeiteten Daten als ein Anhang (ATTACH) zu einer Datenantwortnachricht gespeichert werden, welche von der Servereinheit (SERV) an die Clienteinheit (CL) gesendet wird.

33. Servereinheit (SERV2) nach Anspruch 21, wobei die Verarbeitungseinheit (PROC) einen Ausgangslokalisierungshinweis (urlo) erzeugt, wo die durch die Datenverarbeitungseinheit (PROC) verarbeiteten Daten gespeichert werden.

34. Servereinheit (SERV2) nach Anspruch 21, wobei der Ausgangslokalisierungshinweis (urlo) in der Datenantwortnachricht (DRM) an die Clienteinheit (CL) enthalten ist.

35. Servereinheit (SERV2) nach Anspruch 21, wobei der Nachrichtenaustausch zwischen der Clienteinheit und der Servereinheit durch SOAP-Nachrichten implementiert wird, die in einer JAVA^{®}-Umgebung implementiert sind (JAVA^{®} ist eine eingetragene Marke von Sun Microsystems, Inc.).

## Revendications

1. Procédé pour traiter des jeux de données dans un système de traitement de données (SYS) comprenant une ou plusieurs unités serveuses (SERVm) et une ou plusieurs unités clientes (CL), comprenant les opérations suivantes :
a) recevoir (S71) une demande de traitement de données (PREQ) envoyée par une unité cliente (CL) à une unité serveuse (SERV1), dans une unité d'analyse (ANALYSE) de ladite unité serveuse (SERV1),
ladite demande de traitement de données (PREQ) comprenant, dans une première partie, au moins une référence à un emplacement de données (urliA) indiquant un emplacement (URLI ATTACH) d'au moins un jeu de données devant être traité par ladite unité serveuse (SERV2) ;
**caractérisé par** le fait de
b1) déterminer (S72, S73) dans ladite unité d'analyse (ANALYSE) si ladite référence à un emplacement indique en tant qu'emplacement un emplacement de stockage de données (URLI) du côté de ladite unité serveuse ou une partie jointe (ATTACH) de ladite demande de traitement de données ;
b2) déterminer (S74) dans ladite unité d'analyse (ANALYSE) une nouvelle référence à un emplacement (urln) indiquant un emplacement de stockage (URLN) du côté de ladite unité serveuse, si ladite référence à un emplacement (urliA), dans ladite première partie, indique en tant qu'emplacement une partie jointe (ATTACH) de ladite demande de traitement de données (PREQ) ;
c) stocker (S75) au moins une partie dudit jeu de données stocké dans ladite partie jointe au nouvel emplacement de données (URLN) indiqué par ladite référence à un nouvel emplacement de données (urln) ;
d) retransmettre (S76) ladite référence au nouvel emplacement de données (URLN) à au moins une unité de traitement de données (PROC) qui est appropriée pour le traitement dudit jeu de données ; et
e) traiter (S77) ledit jeu de données stocké audit nouvel emplacement de données indiqué par ladite référence au nouvel emplacement (URLN) sur ladite au moins une unité de traitement (PROC).

2. Procédé selon la revendication 1, comprenant en outre l'opération consistant à retransmettre un déclencheur d'exécution (TRIG) de ladite unité serveuse (SERV1) à ladite unité de traitement de données (PROC) pour déclencher le traitement de données du jeu de données stocké au nouvel emplacement de données par ladite unité de traitement de données (PROC).

3. Procédé selon la revendication 1, comprenant en outre les opérations consistant à remplacer, dans une unité de réécriture de référence à un emplacement de données (REWR), ladite référence à l'emplacement de données (urliA) dans ladite demande de traitement de données (PREQ) par ladite référence au nouvel emplacement de données (URLN) et à retransmettre la demande de traitement de données (PROC) avec la référence remplacée à l'emplacement de données (URLN) à ladite unité de traitement de données (PROC).

4. Procédé selon les revendications 2 et 3, comprenant en outre l'opération consistant à retransmettre ledit déclencheur d'exécution (TRIG) en association avec la demande de traitement de données (PROC) incluant la référence remplacée à l'emplacement de données (URLN) à ladite unité de traitement (PROC).

5. Procédé selon la revendication 1, dans lequel ladite demande de traitement de données (PREQ) comprend également une deuxième partie indiquant le type demandé (TYPE) du traitement destiné audit jeu de données, dans lequel ledit procédé comprend en outre l'opération consistant à déterminer (S46), dans ladite unité d'analyse (ANALYSE), une unité de traitement de données (PROC) appropriée pour la mise en oeuvre du type de traitement (TYPE) indiqué dans ladite deuxième partie et ladite opération de retransmission consiste à retransmettre la référence au nouvel emplacement de données (urln) à l'unité de traitement de données (PROC) déterminée par ladite unité d'analyse (ANALYSE).

6. Procédé selon la revendication 1, comprenant en outre l'opération consistant à retransmettre ladite référence au nouvel emplacement de données (urln) à une pluralité d'unités de traitement de données (PROC) qui sont toutes appropriées pour la mise en oeuvre du traitement de données du jeu de données stocké audit nouvel emplacement (URLN).

7. Procédé selon la revendication 1 ou 6, comprenant en outre les opérations consistant à déterminer une pluralité de références à de nouveaux emplacements de données (urln) dans ladite unité d'analyse (ANALYSE) et à stocker ledit jeu de données à ladite pluralité de nouveaux emplacements de données (URLN).

8. Procédé selon la revendication 1 ou 6, dans lequel une pluralité de références à des emplacements de données (urli) sont contenues dans ladite première partie, lequel procédé comprend les opérations consistant à déterminer une unique référence à un nouvel emplacement de données (urln) dans ladite unité d'analyse (ANALYSE) et à stocker les jeux de données stockés à la pluralité d'emplacements de données indiqués par les références aux emplacements de données (urli) audit unique nouvel emplacement de données (URLN) indiqué par ladite unique référence à un nouvel emplacement de données (urln).

9. Procédé selon la revendication 1 ou 6, dans lequel une pluralité de références à des emplacements de données (urli) sont contenues dans ladite première partie, lequel procédé comprend les opérations consistant à déterminer une pluralité de références à des nouveaux emplacements de données dans ladite unité d'analyse (ANALYSE) et à stocker les jeux de données stockés dans la pluralité d'emplacements de données à ladite pluralité de nouveaux emplacements de données indiqués par ladite pluralité de références à de nouveaux emplacements de données.

10. Procédé selon la revendication 1, comprenant en outre l'opération consistant à stocker ladite référence à un nouvel emplacement de données (urln) dans une mémoire de ladite unité serveuse (SERV1).

11. Procédé selon la revendication 1, comprenant l'opération consistant à utiliser une mémoire du côté de ladite unité serveuse en tant que ledit emplacement de données (URLN).

12. Procédé selon la revendication 1, dans lequel ladite unité de traitement de données (PROC) est un processeur (PROC) dans ladite unité serveuse (SERV2).

13. Procédé selon la revendication 1, dans lequel ladite opération de stockage dudit jeu de données audit nouvel emplacement de données (URLN) indiqué par ladite référence à un nouvel emplacement de données (urln) comprend l'opération consistant à transférer le jeu de données audit nouvel emplacement de données.

14. Procédé selon la revendication 1, dans lequel ladite opération de stockage dudit jeu de données audit nouvel emplacement de données (URLN) indiqué par ladite référence au nouvel emplacement de données (urln) comprend l'opération consistant à copier le jeu de données audit nouvel emplacement de données (URLN).

15. Procédé selon la revendication 1, dans lequel ladite référence à un emplacement de données (urli) contenue dans ladite demande de traitement de données (PRQ) indique en tant qu'emplacement desdites données devant être traitées un emplacement de stockage de données (URLI) du côté de ladite unité serveuse (SERV), ledit procédé comprenant en outre l'opération consistant à stocker les données se trouvant audit emplacement de stockage de données (URLI) audit nouvel emplacement de données (URLN) indiqué par ladite référence à un nouvel emplacement de données (urln) et à traiter le jeu de données stocké au nouvel emplacement de données (URLN) indiqué par ladite référence à un emplacement de données (urli).

16. Procédé selon la revendication 1, comprenant en outre l'opération consistant à stocker les données traitées par ladite unité de traitement de données (PROC) dans un fichier temporaire sur ladite unité serveuse (SERV).

17. Procédé selon la revendication 1, comprenant en outre l'opération consistant à stocker les données traitées par ladite unité de traitement de données (PROC) en tant que fichier joint dans un message de données de réponse (DRM) et à envoyer le message de réponse de ladite unité serveuse (SERV) à ladite unité cliente (CL).

18. Procédé selon la revendication 16 ou 17, comprenant en outre l'opération consistant à générer une référence à un emplacement de sortie (urlo) indiquant un emplacement (URLO) où doivent être stockées les données traitées par ladite unité de traitement de données (PROC).

19. Procédé selon la revendication 18, comprenant en outre l'opération consistant à inclure ladite référence à un emplacement de sortie (urlo) dans ledit message de données de réponse (DRM) à ladite unité cliente (CL).

20. Procédé selon la revendication 1, dans lequel l'échange de messages entre l'unité cliente et l'unité serveuse est mis en oeuvre avec des messages de type SOAP créés dans un environnement JAVA^{®} (JAVA^{®} est une marque déposée par Sun Microsystems, Inc.).

21. Unité serveuse (SERV2) destinée à traiter des jeux de données dans un système de traitement de données (SYS) comprenant une ou plusieurs unités serveuses (SERVm) et une ou plusieurs unités clientes (CL), comprenant :
a) une unité de réception (RMRU) apte à recevoir (S44) une demande de traitement de données (PREQ), envoyée par une unité cliente (CL) à ladite unité serveuse (SERV1),
ladite demande de traitement de données (PREQ) comprenant, dans une première partie, au moins une référence à un emplacement de données (urli ; urliA) indiquant un emplacement (URLI ; ATTACH) d'au moins un jeu de données devant être traité par ladite unité serveuse (SERV2)
**caractérisée par** :
b1) une unité d'analyse (ANALYSE) apte à déterminer si ladite référence à un emplacement (urli ; urliA) indique en tant qu'emplacement un emplacement de stockage de données (URLI) du côté de l'unité serveuse ou une partie jointe (ATTACH) de ladite demande de traitement de données (PREQ) ;
b2) ladite unité d'analyse (ANALYSE) étant en outre apte à déterminer (S47) une référence à un nouvel emplacement (urln) indiquant un emplacement de stockage (URLN) du côté de l'unité serveuse, si ladite référence à un emplacement (urliA) dans ladite première partie indique en tant qu'emplacement une partie jointe (ATTACH) de ladite unité de traitement de données (PREQ) ;
c) une unité de stockage (STORE ; S48) apte à stocker au moins une partie dudit jeu de données stocké dans ladite partie jointe (ATTACH) au nouvel emplacement de données (URLN) indiqué par ladite référence à un nouvel emplacement de données (urln) ;
d) une unité de retransmission (FWD ; S49) apte à retransmettre ladite référence déterminée à un nouvel emplacement de données (urln) à au moins une unité de traitement de données (PROC) qui est appropriée pour le traitement dudit jeu de données ; et
e) une unité de traitement (PROC ; S50) apte à traiter ledit jeu de données stocké audit nouvel emplacement de données (URLN) indiqué par ladite référence à un nouvel emplacement (urln).

22. Unité serveuse (SERV2) selon la revendication 21, comprenant une unité de réécriture de référence à un emplacement de données (REWR) apte à remplacer ladite référence à un emplacement (urli ; urliA) par ladite référence à un nouvel emplacement de données (urln) dans ladite demande de traitement de données (PREQ) et dans laquelle ladite unité de retransmission (REWD) est apte à retransmettre la demande de traitement de données (PROC) avec la référence remplacée à l'emplacement de données (urln) à ladite unité de traitement de données (PROC).

23. Unité serveuse (SERV2) selon la revendication 22, dans laquelle ladite demande de traitement de données retransmise (PROC) avec la référence remplacée à l'emplacement de données (urln) comprend également un déclencheur d'exécution (TRIG).

24. Unité serveuse (SERV2) selon la revendication 21, dans laquelle ladite demande de traitement de données (PREQ) comprend également une deuxième partie indiquant le type demandé (TYPE) du traitement destiné audit jeu de données ; où ladite unité d'analyse (ANALYSE) est en outre apte à déterminer également une unité de traitement de données (PROC) appropriée pour l'exécution du type (TYPE) de traitement indiqué dans ladite deuxième partie ; et ladite unité de retransmission (FWD) est apte à retransmettre la référence au nouvel emplacement de données (urln) à l'unité de traitement de données (PROC) déterminée par ladite unité d'analyse (ANALYSE).

25. Unité serveuse (SERV2) selon la revendication 21, dans laquelle ladite unité de retransmission (FWD) est apte à retransmettre ladite référence à un nouvel emplacement de données (urln) à une pluralité d'unités de traitement de données (PROC) qui sont toutes appropriées pour la mise en oeuvre du traitement de données du jeu de données stocké audit nouvel emplacement (URLN).

26. Unité serveuse (SERV2) selon la revendication 21 ou 25, dans laquelle une pluralité de références à de nouveaux emplacements de données (urli) sont déterminées par ladite unité d'analyse (ANALYSE) et dans laquelle ladite unité de stockage (STORE) est apte à stocker ledit jeu de données à ladite pluralité de nouveaux emplacements de données (URLN).

27. Unité serveuse (SERV2) selon la revendication 21 ou 25, dans laquelle une pluralité de références à des emplacements de données (urli) sont contenues dans ladite première partie, une unique référence à un nouvel emplacement de données (urln) est déterminée par ladite unité d'analyse (ANALYSE) et ladite unité de stockage (STORE) est apte à stocker les jeux de données stockés à la pluralité d'emplacements de données (URLI) audit unique nouvel emplacement de données (URLN) indiqué par ladite référence à un unique nouvel emplacement de données (urli).

28. Unité serveuse (SERV2) selon la revendication 21 ou 26, dans laquelle une pluralité de références à des emplacements de données (urli) sont contenues dans ladite première partie, une pluralité de nouvelles références à des emplacements de données (urln) sont déterminées par ladite unité d'analyse (ANALYSE) et ladite unité de stockage (STORE) est apte à stocker les jeux de données stockés à la pluralité d'emplacements de données (URLI) à ladite pluralité de nouveaux emplacements de données (URLN) indiqués par ladite pluralité de nouvelles références à des emplacements de données (urli).

29. Unité serveuse (SERV2) selon la revendication 21, dans laquelle ladite référence à un emplacement de données (urli) de ladite demande de traitement de données (PREQ) est stockée dans une mémoire de ladite unité serveuse (SERV1).

30. Unité serveuse (SERV2) selon la revendication 21, dans laquelle ledit emplacement de données (urli, urlo, urln) est une mémoire du côté de ladite unité serveuse.

31. Unité serveuse (SERV2) selon la revendication 21, dans laquelle les données traitées par ladite unité de traitement de données (PROC) sont stockées dans un fichier temporaire par l'unité serveuse (SERV).

32. Unité serveuse (SERV2) selon la revendication 21, dans laquelle les données traitées par ladite unité de traitement de données (PROC) sont stockées en tant que pièce jointe (ATTCH) à un message de données de réponse envoyé de ladite unité serveuse (SERV) à ladite unité cliente (CL).

33. Unité serveuse (SERV2) selon la revendication 21, dans laquelle ladite unité de traitement (PROC) génère une référence à un emplacement de sortie (urlo) où sont stockées les données traitées par ladite unité de traitement de données (PROC).

34. Unité serveuse (SERV2) selon la revendication 21, dans laquelle ladite référence à un emplacement de sortie (urlo) est contenue dans ledit message de données de réponse (DRM) à ladite unité cliente (CL).

35. Unité serveuse (SERV2) selon la revendication 21, dans laquelle l'échange de messages entre l'unité cliente et l'unité serveuse est mis en oeuvre avec des messages de type SOAP créés dans un environnement JAVA^{®} (JAVA^{®} est une marque déposée par Sun Microsystems, Inc.).
